# EUROPEAN PATENT APPLICATION

(11) **EP 4 503 763 A1**
(43) Date of publication of application: **05.02.2025**
(21) Application number: 23777600.0
(22) Date of filing: 17.01.2023
(51) Int. Cl.: H04W 52/02

(54) **DTX TRANSMISSION METHOD, NETWORK NODE, NETWORK DEVICE, AND STORAGE MEDIUM**

(30) Priority: 30.03.2022 CN 202210334377
(71) Applicant: Datang Mobile Communications Equipment Co., Ltd., Beijing 100085 (CN)
(72) Inventor: LUO, Chen, Beijing 100085 (CN); CHENG, Fangchen, Beijing 100085 (CN); WANG, Jiaqing, Beijing 100085 (CN); YANG, Meiying, Beijing 100085 (CN); SU, Yuwan, Beijing 100085 (CN); LI, Yaomin, Beijing 100085 (CN)
(74) Representative: Studio Torta S.p.A.
(86) International application number: PCT/CN2023/072629
(87) International publication number: WO 2023/185221

(57) **Abstract**

The present application provides a DTX transmission method, a network node, a network device and a storage medium. The method includes: receiving, by a network node, DTX parameter information of a network device sent by the network device; determining, by the network node, at least one of a DTX on-duration and a DTX off-duration of DTX transmission of the network device, based on the parameter information; receiving, by the network node, the DTX transmission of the network device based on at least one of the DTX on-duration and the DTX off-duration of the DTX transmission. The network node at least includes a user equipment (UE), and the network device at least includes a base station.

## Description

### CROSS-REFERENCE TO RELATED APPLICATION

The present disclosure claims the priority of Chinese Application No. 202210334377.5, filed on March 30, 2022, the disclosure of which is incorporated in its entirety by reference herein.

### TECHNICAL FIELD

The present disclosure relates to the field of communication technologies, and in particular to a discontinuous transmission (DTX) transmission method, a network node, a network device and a storage medium.

### BACKGROUND

In some communication systems (such as 5th Generation Mobile Communication Technology (5G) or 6th Generation Mobile Networks (6G)), in order to ensure that network nodes (such as terminals, core network nodes, and other base stations) can always receive transmission content (such as broadcast signals) sent by network devices (such as base stations), the network devices often need to perform transmission to network nodes all the time, which results in high power consumption of the network devices.

### SUMMARY

Embodiments of the present disclosure provide a discontinuous transmission (DTX) transmission method, a network node, a network device and a storage medium, which can solve the problem of high power consumption of the network device.

One embodiment of the present disclosure provides a discontinuous transmission (DTX) transmission method, including:
receiving, by a network node, DTX parameter information of a network device sent by the network device;
determining, by the network node, at least one of a DTX on-duration and a DTX off-duration of DTX transmission of the network device, based on the parameter information;
receiving, by the network node, the DTX transmission of the network device based on at least one of the DTX on-duration and the DTX off-duration of the DTX transmission;
wherein the network node at least includes a user equipment (UE), and the network device at least includes a base station.

Optionally, the parameter information is used to determine at least one of the following:
a starting position of the DTX on-duration of the DTX transmission;
an end position of the DTX on-duration of the DTX transmission;
duration of the DTX on-duration of the DTX transmission;
a starting position of DTX off-duration of the DTX transmission;
an end position of the DTX off-duration of the DTX transmission;
duration of the DTX off-duration of the DTX transmission.

Optionally, the parameter information includes at least one of the following:
DTX cycle;
an offset value of a starting position of the DTX on-duration;
a starting position of the DTX on-duration;
an end position of the DTX on-duration;
an offset value of the end position of the DTX on-duration;
duration of the DTX on-duration;
cycle of the DTX on-duration;
an offset value of a starting position of the DTX off-duration;
a starting position of the DTX off-duration;
an end position of the DTX off-duration;
an offset value of an end position of the DTX off-duration;
duration of the DTX off-duration;
cycle of the DTX off-duration.

Optionally, the DTX parameter information is received through at least one of the following: broadcast message, control signaling, and high-level signaling.

Optionally, the receiving, by the network node, the DTX transmission of the network device based on at least one of the DTX on-duration and the DTX off-duration of the DTX transmission, includes at least one of the following:
receiving, by the network node, during the DTX on-duration, at least one of the following items sent by the network device: a message, a signal, or channel information;
performing, by the network node, a target behavior during the DTX off-duration, wherein the target behavior includes at least one of the following:
receiving part of signals;
receiving part of channel information;
receiving part of messages;
performing part of measurements;
performing part of measurement reporting;
stopping target reception;
receiving messages according to message configuration of DTX off-duration;
receiving signals according to signal configuration of DTX off-duration;
receiving channel information according to channel information configuration of DTX off-duration.

Optionally, the receiving part of signals at least includes: receiving some signals;
the receiving part of channel information includes at least one of the following: receiving some data channel information, receiving some control channel information;
the performing part of measurements includes at least one of the following: periodic measurement, semi-persistent measurement, aperiodic measurement;
the performing part of measurement reporting includes at least one of the following: periodic measurement reporting, semi-persistent measurement reporting, and aperiodic measurement reporting;
the stopping target reception includes at least one of the following: stopping all reception behaviors related to data transmission; stopping receiving some or all signals; stopping receiving some or all channel information; stopping transmitting some or all request messages; stopping some or all measurements; stopping starting some or all timers.

Optionally, the network node performs receiving behaviors corresponding to different time durations during the DTX on-duration and the DTX off-duration of the DTX transmission; and/or,
the network node perform reception in different frequency domain resources during the DTX on-duration and the DTX off-duration of the DTX transmission, respectively; and/or,
the network node performs different receiving behaviors during the DTX on-duration and the DTX off-duration of the DTX transmission.

Optionally, at least one of the DTX on-duration and the DTX off-duration of the DTX transmission has an association with DRX on-duration or DTX off-duration of the UE;
and/or,
in the case that the network node further includes a core network node, at least one of the DTX on-duration and DTX off-duration of the DTX transmission is associated with transmission of backhaul information, and the backhaul information is information backhauled by the network device to the core network node.

Optionally, at least one of the DTX on-duration and DTX off-duration of the DTX transmission having an association with the DRX on-duration or off-duration of the UE, includes at least one of the following:
the DTX parameter information and/or parameters of the UE are used by the UE to determine at least one of the DTX on-duration and DTX off-duration;
cycle of the DTX transmission has an association with cycle of DRX transmission of the UE;
the DTX on-duration of the DTX transmission has a first association with a signal, channel or message in the DRX off-duration of the UE;
the DTX on-duration of the DTX transmission has a second association with transmission content of a signal, channel or message in the DRX off-duration of the UE;
the DTX on-duration of the DTX transmission has a third association with communication behavior of the UE in the DRX off-duration of the UE, and the communication behavior includes at least one of periodic behavior and a semi-persistent behavior.

Optionally, the periodic behavior includes at least one of the following: periodic (configured grant) CG transmission, periodic measurement and/or periodic measurement reporting;
and/or,
the semi-persistent behavior includes at least one of the following: semi-persistent scheduling (SPS) physical downlink shared channel (PDSCH) transmission, semi-persistent CG transmission, semi-persistent measurement, and semi-persistent measurement reporting.

Optionally, the DRX on-duration of the UE includes:
DRX on-duration of a target UE corresponding to the network device, wherein the target UE is a specific, some or all UEs corresponding to the network device.

Optionally, the determining, by the network node, at least one of the DTX on-duration and the DTX off-duration of the DTX transmission of the network device, based on the parameter information, includes:
in case that DTX on-duration determined by the network node based on the parameter information does not match DRX on-duration of the UE, determining, by the network node, at least one of the DTX on-duration and the DTX off-duration of the DTX transmission of the network device based on a preset criteria.

Optionally, the determining, by the network node, at least one of the DTX on-duration and the DTX off-duration of the DTX transmission of the network device based on a preset criteria, includes:
determining, by the network node, at least one of the DTX on-duration and the DTX off-duration of the DTX transmission of the network device based on at least one of the following:
protocol definition, parameter set, UE assistance information, UE preference information.

One embodiment of the present disclosure further provides a discontinuous transmission (DTX) transmission method, includes:
sending, by a network device, DTX parameter information of the network device to a network node;
performing, by the network device, DTX transmission for the network node;
wherein the network node at least includes a user equipment (UE), and the network device at least includes a base station.

Optionally, the parameter information is used to determine at least one of the following:
a starting position of DTX on-duration of the DTX transmission;
an end position of DTX on-duration of the DTX transmission;
duration of DTX on-duration of the DTX transmission;
a starting position of DTX off-duration of the DTX transmission;
an end position of DTX off-duration of the DTX transmission;
duration of DTX off-duration of the DTX transmission.

Optionally, the parameter information includes at least one of the following:
DTX cycle;
an offset value of a starting position of DTX on-duration;
a starting position of the DTX on-duration;
an end position of the DTX on-duration;
an offset value of the end position of the DTX on-duration;
duration of the DTX on-duration;
cycle of the DTX on-duration;
an offset value of a starting position of DTX off-duration;
a starting position of the DTX off-duration;
an end position of the DTX off-duration;
an offset value of an end position of the DTX off-duration;
duration of the DTX off-duration;
cycle of the DTX off-duration.

Optionally, the DTX parameter information is transmitted through at least one of the following: broadcast message, control signaling, and high-level signaling.

Optionally, the performing, by the network device, DTX transmission for the network node, includes at least one of the following:
transmitting, by the network device, during DTX on-duration, at least one of the following to the network node: a message, a signal, or channel information;
performing, by the network device, a target behavior during DTX off-duration, wherein the target behavior includes at least one of the following:
   transmitting part of signals;
   transmitting part of channel information;
   transmitting part of messages;
   transmitting part of measurement signals;
   receiving part of measurement reporting;
   stopping target transmission;
   transmitting messages according to message configuration of DTX off-duration;
   transmitting signals according to signal configuration of DTX off-duration;
   transmitting channel information according to channel information configuration of DTX off-duration.

Optionally, the transmitting part of signals at least includes: transmitting some signal;
the transmitting part of channel information includes at least one of the following: transmitting some data channel information, transmitting some control channel information;
the transmitting part of measurement signals includes at least one of the following: transmitting a periodic measurement signal, transmitting a semi-persistent measurement signal, and transmitting an aperiodic measurement signal;
the receiving part of measurement reporting includes at least one of the following: receiving a periodic measurement report, receiving a semi-persistent measurement report, and receiving an aperiodic measurement report;
the stopping target transmission includes at least one of the following:
   stopping all transmission behaviors related to data transmission;
   stopping transmitting some or all signals;
   stopping transmitting some or all channel information;
   stopping receiving some or all request messages;
   stopping transmitting some or all measurement signals;
   stopping starting some or all timers.

Optionally, the network node performs transmission behaviors corresponding to different time durations during DTX on-duration and DTX off-duration of the DTX transmission; and/or,
the network node perform transmission in different frequency domain resources during the DTX on-duration and the DTX off-duration of the DTX transmission, respectively; and/or,
the network node performs different transmission behaviors during the DTX on-duration and the DTX off-duration of the DTX transmission.

Optionally, at least one of DTX on-duration and DTX off-duration of the DTX transmission has an association with DRX on-duration or DTX off-duration of the UE;
and/or,
in the case that the network node further includes a core network node, at least one of the DTX on-duration and DTX off-duration of the DTX transmission is associated with transmission of backhaul information, and the backhaul information is information backhauled by the network device to the core network node.

Optionally, at least one of the DTX on-duration and DTX off-duration of the DTX transmission having an association with DRX on-duration or off-duration of the UE, includes at least one of the following:
the DTX parameter information and/or parameters of the UE are used by the UE to determine at least one of DTX on-duration and DTX off-duration;
cycle of the DTX transmission has an association with cycle of DRX transmission of the UE;
DTX on-duration of the DTX transmission has a first association with a signal, channel or message in DRX off-duration of the UE;
DTX on-duration of the DTX transmission has a second association with transmission content of a signal, channel or message in DRX off-duration of the UE;
DTX on-duration of the DTX transmission has a third association with communication behavior of the UE in DRX off-duration of the UE, and the communication behavior includes at least one of periodic behavior and a semi-persistent behavior.

Optionally, the periodic behavior includes at least one of the following: periodic (configured grant) CG transmission, periodic measurement and/or periodic measurement reporting;
and/or,
the semi-persistent behavior includes at least one of the following: semi-persistent scheduling (SPS) physical downlink shared channel (PDSCH) transmission, semi-persistent CG transmission, semi-persistent measurement, and semi-persistent measurement reporting.

Optionally, the DRX on-duration of the UE includes:
DRX on-duration of a target UE corresponding to the network device, wherein the target UE is a specific, some or all UEs corresponding to the network device.

Optionally, the parameter information is used to determine at least one of DTX on-duration and DTX off-duration of the DTX transmission, and the DTX on-duration and the DTX off-duration are determined based on at least one of the following:
protocol definition, parameter set, UE assistance information, and UE preference information.

One embodiment of the present disclosure further provides a network node, including: a memory, a transceiver, and a processor;
wherein the memory is used to store a computer program; the transceiver is used to send and receive data under control of the processor; the processor is used to read the computer program in the memory and perform the following operations:
receiving DTX parameter information of a network device sent by the network device;
determining at least one of a DTX on-duration and a DTX off-duration of DTX transmission of the network device, based on the parameter information;
receiving the DTX transmission of the network device based on at least one of the DTX on-duration and the DTX off-duration of the DTX transmission;
wherein the network node at least includes a user equipment (UE), and the network device at least includes a base station.

Optionally, the parameter information is used to determine at least one of the following:
a starting position of the DTX on-duration of the DTX transmission;
an end position of the DTX on-duration of the DTX transmission;
duration of the DTX on-duration of the DTX transmission;
a starting position of DTX off-duration of the DTX transmission;
an end position of the DTX off-duration of the DTX transmission;
duration of the DTX off-duration of the DTX transmission.

Optionally, the parameter information includes at least one of the following:
DTX cycle;
an offset value of a starting position of the DTX on-duration;
a starting position of the DTX on-duration;
an end position of the DTX on-duration;
an offset value of the end position of the DTX on-duration;
duration of the DTX on-duration;
cycle of the DTX on-duration;
an offset value of a starting position of the DTX off-duration;
a starting position of the DTX off-duration;
an end position of the DTX off-duration;
an offset value of an end position of the DTX off-duration;
duration of the DTX off-duration;
cycle of the DTX off-duration.

Optionally, the receiving the DTX transmission of the network device based on at least one of the DTX on-duration and the DTX off-duration of the DTX transmission, includes at least one of the following:
receiving, during the DTX on-duration, at least one of the following items sent by the network device: a message, a signal, or channel information;
performing a target behavior during the DTX off-duration, wherein the target behavior includes at least one of the following:
   receiving part of signals;
   receiving part of channel information;
   receiving part of messages;
   performing part of measurements;
   performing part of measurement reporting;
   stopping target reception;
   receiving messages according to message configuration of DTX off-duration;
   receiving signals according to signal configuration of DTX off-duration;
   receiving channel information according to channel information configuration of DTX off-duration.

Optionally, the network node performs receiving behaviors corresponding to different time durations during the DTX on-duration and the DTX off-duration of the DTX transmission; and/or,
the network node perform reception in different frequency domain resources during the DTX on-duration and the DTX off-duration of the DTX transmission, respectively; and/or,
the network node performs different receiving behaviors during the DTX on-duration and the DTX off-duration of the DTX transmission.
One embodiment of the present disclosure further provides network device, including: a memory, a transceiver, and a processor;
wherein the memory is used to store a computer program; the transceiver is used to send and receive data under control of the processor; the processor is used to read the computer program in the memory and perform the following operations:
   sending DTX parameter information of the network device to a network node;
   performing DTX transmission for the network node;
   wherein the network node at least includes a user equipment (UE), and the network device at least includes a base station.

Optionally, the parameter information is used to determine at least one of the following:
a starting position of DTX on-duration of the DTX transmission;
an end position of DTX on-duration of the DTX transmission;
duration of DTX on-duration of the DTX transmission;
a starting position of DTX off-duration of the DTX transmission;
an end position of DTX off-duration of the DTX transmission;
duration of DTX off-duration of the DTX transmission.

Optionally, the parameter information includes at least one of the following:
DTX cycle;
an offset value of a starting position of DTX on-duration;
a starting position of the DTX on-duration;
an end position of the DTX on-duration;
an offset value of the end position of the DTX on-duration;
duration of the DTX on-duration;
cycle of the DTX on-duration;
an offset value of a starting position of DTX off-duration;
a starting position of the DTX off-duration;
an end position of the DTX off-duration;
an offset value of an end position of the DTX off-duration;
duration of the DTX off-duration;
cycle of the DTX off-duration.

Optionally, the performing DTX transmission for the network node, includes at least one of the following:
transmitting, during DTX on-duration, at least one of the following to the network node: a message, a signal, or channel information;
performing a target behavior during DTX off-duration, wherein the target behavior includes at least one of the following:
   transmitting part of signals;
   transmitting part of channel information;
   transmitting part of messages;
   transmitting part of measurement signals;
   receiving part of measurement reporting;
   stopping target transmission;
   transmitting messages according to message configuration of DTX off-duration;
   transmitting signals according to signal configuration of DTX off-duration;
   transmitting channel information according to channel information configuration of DTX off-duration.

Optionally, the network node performs transmission behaviors corresponding to different time durations during DTX on-duration and DTX off-duration of the DTX transmission; and/or,
the network node perform transmission in different frequency domain resources during the DTX on-duration and the DTX off-duration of the DTX transmission, respectively; and/or,
the network node performs different transmission behaviors during the DTX on-duration and the DTX off-duration of the DTX transmission.

One embodiment of the present disclosure provides a network node, including:
a first receiving module configured to receive DTX parameter information of a network device sent by the network device;
a determination module configured to determine at least one of a DTX on-duration and a DTX off-duration of DTX transmission of the network device, based on the parameter information;
a second receiving module configured to receive the DTX transmission of the network device based on at least one of the DTX on-duration and the DTX off-duration of the DTX transmission;
wherein the network node at least includes a user equipment (UE), and the network device at least includes a base station.

One embodiment of the present disclosure provides a network device, including:
a sending module configured to send DTX parameter information of the network device to a network node;
an execution module configured to perform DTX transmission for the network node;
wherein the network node at least includes a user equipment (UE), and the network device at least includes a base station.

One embodiment of the present disclosure provides a processor-readable storage medium, including a computer program stored thereon; wherein the computer program is used to cause a processor to perform the DTX transmission method on the network node side provided in the embodiment of the present application, or the computer program is used to cause the processor to perform the DTX transmission method on the network device side provided in the embodiment of the present application.

In the embodiment of the present application, the network node receives DTX parameter information of the network device sent by the network device; the network node determines at least one of DTX on-duration and DTX off-duration of DTX transmission of the network device based on the parameter information; the network node receives DTX transmission of the network device based on at least one of the DTX on-duration and DTX off-duration of the DTX transmission. The network node at least includes a UE, and the network device at least includes a base station. In this way, the network device can be supported to perform DTX transmission, thereby saving power consumption of the network device.

### BRIEF DESCRIPTION OF THE DRAWINGS

FIG. 1 is a schematic diagram of a network architecture applicable to an embodiment of the present disclosure;
FIG. 2 is a flowchart of a DTX transmission method according to an embodiment of the present disclosure;
FIG. 3 is a schematic diagram showing DTX transmission according to an embodiment of the present disclosure;
FIG. 4 is a flowchart of another DTX transmission method according to an embodiment of the present disclosure;
FIG. 5 is a schematic diagram showing DTX transmission according to an embodiment of the present disclosure;
FIG. 6 is a schematic diagram showing DTX transmission according to an embodiment of the present disclosure;
FIG. 7 is a schematic diagram showing DTX transmission according to an embodiment of the present disclosure;
FIG. 8 is a schematic diagram showing DTX transmission according to an embodiment of the present disclosure;
FIG. 9 is a schematic diagram of a network node according to an embodiment of the present disclosure;
FIG. 10 is a schematic diagram of a network device according to an embodiment of the present disclosure;
FIG. 11 is a schematic diagram of another network node according to an embodiment of the present disclosure; and
FIG. 12 is a schematic diagram of another network device according to an embodiment of the present disclosure.

### DETAILED DESCRIPTION

In order to make the technical problems to be solved, technical solutions and advantages of the present application clearer, a detailed description will be given hereinafter with reference to the accompanying drawings and specific embodiments.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "j" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

One embodiment of the present application provide a DTX transmission method, a network node, a network device and a storage medium, which can solve the problem of high power consumption of the network device.

The method and the device are based on the same application concept. Since the method and the device solve the problem in a similar principle, implementation of the device and the method can refer to each other, and the repeated parts will not be repeated.

The technical solution of the embodiment of the present disclosure may be applied to various systems, especially a 6G system. For example, the applicable system may be Global System of Mobile communication (GSM), Code Division Multiple Access (CDMA) system, Wideband Code Division Multiple Access (WCDMA) General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system, 6G system. Each of these systems includes a terminal device and a network device. Each system further includes a core network part, e.g., an Evolved Packet System (EPS) or 5G system (5GS).

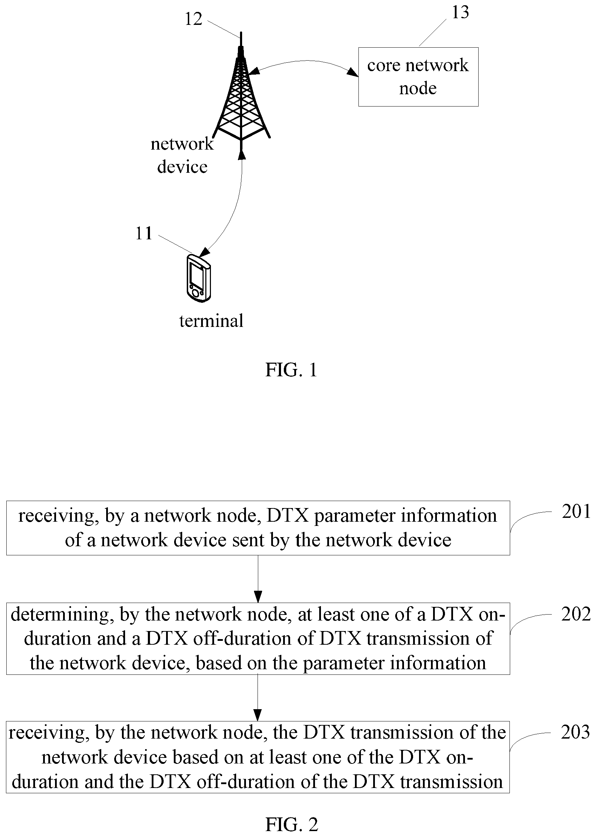

Referring to FIG. 1, it is a schematic diagram of a network architecture applicable to an embodiment of the present disclosure. As shown in FIG. 1, the network architecture includes a terminal 11, a network device 12, and a core network node 13.

The terminal 11 involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, a Personal Digital Assistant (PDA), or a reduced capability (redcap) terminal. In addition, the wireless terminal device may also be called as system, subscriber unit, subscriber station, mobile station, mobile, remote station, access point, remote terminal, access terminal, user terminal, user agent or user device, which will not be particularly defined herein.

The network device 12 involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a 6G base station, a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

The core network node 13 involved in the embodiment of the present application may include: User Plane Function (UPF), Session Management Function (SMF), Access and Mobility Management Function (AMF), Network Slice Admission Control Function (NSACF), Network Slice Selection Function (NSSF), Network Exposure Function (NEF), Network Repository Function (NRF), Policy Control Function (PCF), Visited Security Edge Protection Proxy (vSEPP), Network Data Analytic Function (NWDAF), Data Collection Coordination Function (DCCF), Data Collection Function (DCF), Analytics Data Repository Function (ADRF), Unified Data Management (UDM), Authentication Server Function (AUSF), Network Slice-Specific Authentication and Authorization Function (NSSAAF).

In the embodiment of the present application, Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Referring to FIG. 2, FIG. 2 is a flowchart of a DTX transmission method according to an embodiment of the present application. As shown in FIG. 2, the method includes the following steps.

Step 201: receiving, by a network node, DTX parameter information of a network device sent by the network device.

Step 202: determining, by the network node, at least one of a DTX on-duration and a DTX off-duration of DTX transmission of the network device, based on the parameter information.

Step 203: receiving, by the network node, the DTX transmission of the network device based on at least one of the DTX on-duration and the DTX off-duration of the DTX transmission.

The network node at least includes a UE, and the network device at least includes a base station.

The above DTX parameter information may be parameter information for determining at least one of the DTX on-duration and the DTX off-duration of the DTX transmission. For example, the above parameter information may explicitly indicate at least one of the DTX on-duration and the DTX off-duration, or the above parameter information may implicitly indicate at least one of the DTX on-duration and the DTX off-duration.

The above DTX parameter information may be transmitted through UE's Uu interface, for example, received through at least one of the following:
broadcast message, control signaling, and high-level signaling.

The foregoing determining at least one of a DTX on-duration and a DTX off-duration of DTX transmission of the network device based on the parameter information may include: determining at least one of the DTX on-duration and the DTX off-duration of DTX transmission of the network device, based on association between the parameter information and the DTX on-duration and the DTX off-duration. For example: the above parameter information is used to determine at least one of start time, end time and duration of on-duration and/or off-duration of the DTX transmission of a base station. For UE in a connected state, the DTX parameter information is sent to the UE through at least one of high-level signaling, broadcast message and control signaling. For UE in an idle state, the DTX parameter information is sent to the UE through at least one of broadcast message, system message, control signaling and high-level signaling. Here, the control signaling includes L1 signaling and/or MAC layer signaling.

In the embodiment of the present application, UE in an idle state may be an idle UE or an inactive UE.

The receiving the DTX transmission of the network device based may include: receiving the DTX transmission of the network device during a DRX on-duration of the UE, or receiving the DTX transmission of the network device during a DRX off-duration of the UE.

In the embodiments of the present application, in some implementations, the above network node may include a core network node or other base station.

In the embodiment of the present application, the above steps can support DTX transmission of the network device, thereby saving power consumption of the network device. Further, since the network node receives the DTX transmission of the network device, the power consumption of the network node can also be saved.

In some implementations, DTX transmission of the network device includes one or more of the following combinations: information transmitted from the base station to the core network, signaling, channel information and/or signals transmitted from the base station to UE, and information transmitted between base stations. DTX transmission of the base station can be divided into two states: DTX on-duration and DTX off-duration; during DTX on-duration, the base station normally transmits channel information and/or signals to any one or more of the core network, the UE or base stations, and during DTX off-duration, the base station stops transmitting all or part of the information and/or signals to any one or more of the core network, the UE and the base stations.

It should be noted that the core network, UE and base station here refer to a type of network node, and are not limited to one.

In some embodiments, when the base station is under low load or has no service transmission, the base station may perform discontinuous transmission of information and/or signal, that is, transmitting first transmission information to a first network node in the DTX on-duration, and transmitting second transmission information to the first network node or not transmitting the first information in the DTX off-duration.

The first network node may be any one or more of a core network, a UE and a base station.

The first transmission information is one or a combination of the following information:
information transmission between the base station and the UE, such as information transmission on Uu interface.
information transmission between the base station and the core network, such as information transmission on NG or S1 interface.
information transmission between base stations, such as information transmission on Xn or X2 interface.

The information transmitted by the base station to the UE includes but is not limited to one or a combination of the following: system broadcast, paging, access control, energy saving information, mobility management, control information, data transmission related information, etc.

The information transmitted by the base station to the core network includes but is not limited to one or a combination of the following: Protocol Data Unit (PDU) session management, UE context management, mobility management, paging, Non-Access-Stratum (NAS) signaling data transmission, NG interface management, warning information transmission, NR Positioning Protocol A (NRPPa) signaling transmission, UE tracking, location reporting, RAN configuration transmission, transmission link management, UE capability information management and other information.

The information transmitted between base stations includes but is not limited to one or a combination of the following: mobility management, dual connection management, interface management, energy saving management, flow control management and other information.

The second transmission information may be a subset of the first transmission information. For example, in the information transmitted by the base station to the core network, during the DTX off-duration, the base station only sends warning information to the core network, or does not perform UE context management and/or UE tracking and/or location reporting and other related information. For information between base stations, during the DTX off-duration, the base station does not transmit interface management and other related information to other base stations.

As an optional implementation, the parameter information is used to determine at least one of the following:
a starting position of DTX on-duration of DTX transmission;
an end position of DTX on-duration of DTX transmission;
duration of DTX on-duration of DTX transmission;
a starting position of DTX off-duration of DTX transmission;
an end position of DTX off-duration of DTX transmission;
duration of DTX off-duration of DTX transmission.

The above starting position may include at least one of the following: starting time, starting frequency domain position.

The above end position may include at least one of the following: end time, end frequency domain position.

It should be noted that, in this implementation, in the case that the above parameter information determines some of the above items, remaining items may be determined based on determined items. For example, if the above parameter information determines a starting position of the DTX on-duration, an end position of the DTX on-duration and duration of the DTX on-duration can be determined based on the starting position of the DTX on-duration, because association between the starting position, the end position and the duration of the DTX on-duration can be pre-configured or defined by the protocol; and the starting position, the end position and the duration of the DTX on-duration can also determine the starting position, the end position and the duration of the DTX off-duration. For another example, if the above parameter information determines the starting position of the DTX off-duration, the end position of the DTX off-duration and the duration of the DTX off-duration can be determined based on the starting position of the DTX off-duration, because association between the starting position, the end position and the duration of the DTX off-duration can be pre-configured or defined by the protocol; and the starting position, the end position and the duration of the DTX off-duration can also determine the starting position, the end position and the duration of the DTX off-duration.

In this implementation, at least one of the DTX on-duration and the DTX off-duration of the DTX transmission can be flexibly determined.

As an optional implementation manner, the parameter information includes at least one of the following:
DTX cycle;
offset value of starting position of DTX on-duration;
starting position of DTX on-duration;
end position of DTX on-duration;
offset value of end position of DTX on-duration;
duration of DTX on-duration;
cycle of DTX on-duration;
offset value of starting position of DTX off-duration;
starting position of DTX off-duration;
end position of DTX off-duration;
offset value of end position of DTX off-duration;
duration of DTX off-duration;
cycle of DTX off-duration.

In this implementation, at least one of DTX on-duration and DTX off-duration can be determined by sending at least one of the above items. For example, after the UE receives the DTX parameter information sent by the base station, the UE determines at least one of the starting time, end time and duration of the on-duration and/or off-duration of the DTX transmission of the base station. For instance, the UE can directly obtain at least one of the starting time, end time and duration of the on-duration and/or off-duration of the DTX transmission according to the received DTX parameter information, or can derive and obtain at least one of the starting time, end time and duration of the on-duration and/or off-duration of the DTX transmission according to the received DTX parameter information and parameters of the UE (parameter information of the UE can be understood as parameter information configured for the UE). Alternatively, when the above DTX parameter information includes one or more items, association relationship between this one or more items and other items can be determined to derive other items. For example, the above DTX parameter information may include: DTX cycle, offset value of starting position of DTX on-duration and duration of DTX on-duration; or DTX cycle, offset value of starting position of DTX on-duration and offset value of end time of DTX on-duration; or starting time of DTX on-duration and end time of DTX on-duration; or cycle of DTX on-duration and duration of DTX on-duration, etc.

In addition, time-related information in the above DTX parameter information may be an absolute time, or may have a certain association with the parameter information of the UE, or may have both. The parameter information of the UE here may include at least one of the following:
relevant parameters of UE DRX transmission, receiving position of broadcast messages, receiving position of control channel information, receiving position of shared channel information, and signal receiving position.

It should be noted that the signal in the embodiment of the present application includes at least one of the following:
reference signal, energy saving signal or wake-up signal, etc.

In this implementation, at least one of the DTX on-duration and the DTX off-duration can be determined by sending at least one of the above items, thereby saving overhead of the parameter information.

As an optional implementation, the receiving, by the network node, the DTX transmission of the network device based on at least one of the DTX on-duration and the DTX off-duration of the DTX transmission, includes at least one of the following:
receiving, by the network node, during the DTX on-duration, at least one of the following items sent by the network device: a message, a signal, or channel information;
performing, by the network node, a target behavior during the DTX off-duration, where the target behavior includes at least one of the following:
receiving part of signals;
receiving part of channel information;
receiving part of messages;
performing part of measurements;
performing part of measurement reporting;
stopping target reception;
receiving messages according to message configuration of DTX off-duration;
receiving signals according to signal configuration of DTX off-duration;
receiving channel information according to channel information configuration of DTX off-duration.

It should be noted that the channel information in the embodiments of the present application may include: control channel information and/or shared channel information. The control channel information includes uplink and downlink control channel information, and the shared channel information includes at least one of uplink and downlink shared channel information.

The network node receiving at least one of the message, signal or channel information sent by the network device during the DTX on-duration may include: normally receiving, by the network node, at least one of the following sent by the network device during the DTX on-duration: message, signal or channel information.

The message configuration of the DTX off-duration is a message configuration for transmitting messages during the DTX off-duration, for example, transmitting a specific message on control channel and/or data sharing channel. The signal configuration of the DTX off-duration is a signal configuration for transmitting signals during the DTX off-duration, for example, time-frequency-spatial domain resource location. The channel information configuration of the DTX off-duration is channel configuration for transmitting channel information during the DTX off-duration, for example, search space set related parameter configuration, time-frequency-spatial domain resource location, such as sparse cycle of at least one of synchronization signal block (SSB), CSI-RS and TRS, such as performing reception according to the sparse cycle of sparse SSB.

In this implementation, the target behavior may be a specific DTX off-duration behavior performed by the UE during the off-duration of the base station. The specific DTX off-duration behavior can be partial reception of configured signals, channels and/or messages, or stopping reception of configured signals, channels and/or messages. For example, the specific reception behavior includes: SPS PDSCH reception, PDCCH monitoring, SR transmission, periodic/semi-persistent measurement, signal reception, etc.

The receiving part of signals may at least include: receiving some signals, such as receiving a channel state information-reference signal (CSI-RS) and CSI-RS for tracking (TRS).

The receiving part of channel information may include at least one of the following: receiving some data channel information, receiving some control channel information, such as receiving PDCCH and/or PDSCH, receiving SPS PDSCH.

The performing part of measurements may include at least one of the following: periodic measurement, semi-persistent measurement, aperiodic measurement.

The performing part of measurement reporting may include at least one of the following: periodic measurement reporting, semi-persistent measurement reporting, and aperiodic measurement reporting.

The stopping target reception may include at least one of the following:
stopping all reception behaviors related to data transmission;
stopping receiving some or all signals;
stopping receiving some or all channel information;
stopping transmitting some or all request messages;
stopping some or all measurements;
stopping starting some or all timers.

The above some signal may be one or more specific signals; the above some channel information may be one or more specific channel information; the above some request message may be one or more specific request messages; and the above some measurement may be one or more measurements.

In this implementation, through the above behaviors in the DTX on-duration and the DTX off-duration, the power consumption of the UE can be saved.

As an optional implementation, the network node performs receiving behaviors corresponding to different time durations during the DTX on-duration and the DTX off-duration of the DTX transmission; and/or,
the network node perform reception in different frequency domain resources during the DTX on-duration and the DTX off-duration of the DTX transmission, respectively; and/or,
the network node performs different receiving behaviors during the DTX on-duration and the DTX off-duration of the DTX transmission.

In the case that the above DTX on-duration and DTX off-duration correspond to different time durations respectively, a first set of signals, channel information and/or messages received by the network node during the DTX off-duration is a subset of a second set of signals, channel information and/or messages received by the network node during the DTX on-duration; or, the second set has some intersection or no intersection with the first set. Alternatively, in the case that the above DTX on-duration and DTX off-duration correspond to different time durations respectively, the number of times the network node receives signals, channel information and/or messages in the DTX on-duration is greater than the number of times the network node receives signals, channel information and/or messages in the DTX off-duration, etc.

In the case that the above DTX on-duration and DTX off-duration correspond to different frequency domain resources, the network device uses different numbers of frequency domain resources, frequency bands or frequency points in the DTX on-duration and the DTX off-duration. For example, the number of frequency domain resources used by the network node in the DTX on-duration is greater than the number of frequency domain resources used by the network node in the DTX off-duration, or the frequency band used by the network node in the DTX on-duration is greater than the frequency band used by the network node in the DTX off-duration, or the bandwidth used by the network node in the DTX on-duration is greater than the bandwidth used by the network node in the DTX off-duration, or the network node uses different frequency points in the DTX on-duration and in the DTX off-duration respectively. The above numbers of frequency domain resources, frequency bands or frequency points are only for illustrative purposes.

In the case that the DTX on-duration and the DTX off-duration of the above DTX transmission correspond to different transmission behaviors respectively, the network node performs different reception behaviors of signals, channels and/or messages during the DTX on-duration and the DTX off-duration of the above DTX transmission. For example, the network node normally receives signals, channels and/or messages in the DTX on-duration; and the network node receives some signals, channels and/or messages or stops sending signals, channels and/or messages in the DTX off-duration; or, the power consumption of transmission behavior of the network device in the DTX on-duration is greater than the power consumption of transmission behavior of the network device in the DTX off-duration; or, the number of transmissions of the transmission behavior of the network device in the DTX on-duration is greater than the number of transmissions of the transmission behavior of the network device in the DTX off-duration, etc.

In this implementation, DTX transmission in multiple dimensions of time, frequency domain resources and transmission behavior can be realized to further save power consumption of network device. Further, the above time, frequency domain resources and transmission behavior can be realized in combination with each other, for example, the DTX on-duration and DTX off-duration of DTX transmission correspond to different time durations respectively, and the DTX on-duration and DTX off-duration of DTX transmission correspond to different frequency domain resources respectively, and the DTX on-duration and DTX off-duration of DTX transmission correspond to different transmission behaviors respectively.

As an optional implementation, at least one of the DTX on-duration and the DTX off-duration of the DTX transmission has an association with the DRX on-duration or DTX off-duration of the UE;
and/or,
in the case that the network node also includes a core network node, at least one of the DTX on-duration and DTX off-duration of the DTX transmission is associated with transmission of backhaul information, and the backhaul information is information backhauled by the network device to the core network node.

The association between at least one of the DTX on-duration and the DTX off-duration of the DTX transmission and the DRX on-duration or DTX off-duration of the UE, may include at least one of the following:
DTX on-duration of DTX transmission is associated with DRX on-duration of the UE;
DTX off-duration of DTX transmission is associated with DRX on-duration of the UE;
DTX on-duration of DTX transmission is associated with DRX off-duration of the UE;
DTX off-duration of DTX transmission is associated with DRX off-duration of the UE.

For example, the starting time and/or end time and/or duration of the on-duration of DTX transmission of the base station is consistent with those of the on-duration of DRX transmission of the UE, or there are other associations,
the starting time and/or end time and/or duration of the off-duration of DTX transmission of the base station is consistent with those of the off-duration of DRX transmission of the UE, or there are other associations,
the on-duration of DTX transmission of the base station has association in time with dynamically changed DRX on-duration of the UE.

The above association may be an association relationship defined by a protocol or pre-configured. In addition, the above association relationships are consistent with each other, or the UE may obtain on-duration and/or off-duration of DTX transmission according to the association relationship between the two.

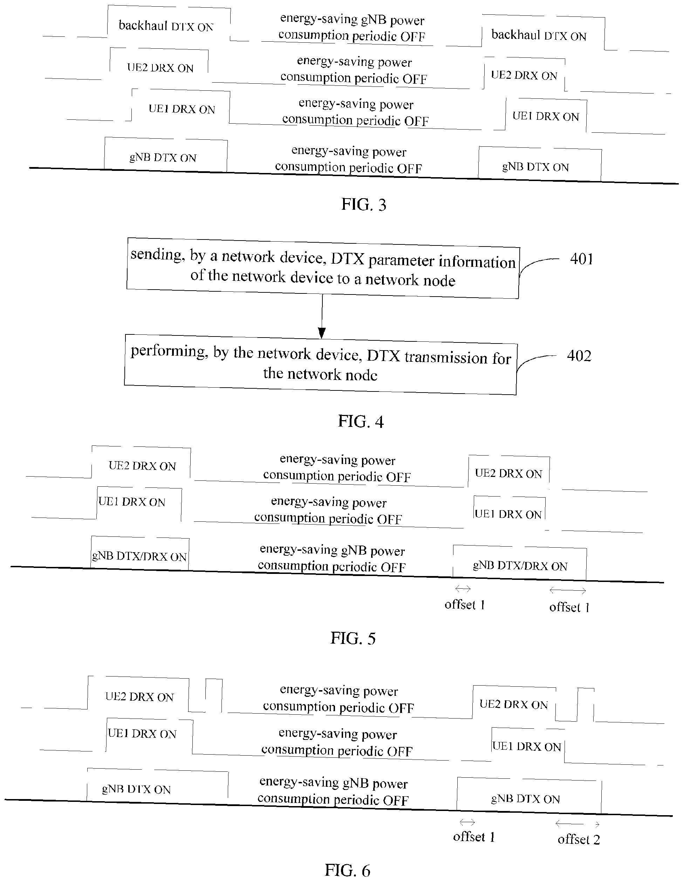

An association relationship can be shown in FIG. 3, on-duration of DTX transmission covers DRX on-duration of UE, and the off-duration of DTX transmission overlaps with DRX off-duration of UE. In some embodiments, if there is backhaul information, on-duration of DTX transmission covers DTX on-duration of the backhaul information. The backhaul DTX ON in FIG. 3 represents DTX on-duration of the backhaul information, and the off-duration of DTX transmission overlaps with the DTX off-duration of the backhaul information. The energy-saving gNB power consumption periodic OFF period represents DTX off-duration of the backhaul information. It should be noted that FIG. 3 is only an example, and the relationship between DTX transmission and UE DRX on-duration and the relationship between DTX transmission and backhaul information can be parallel and do not affect each other. In addition, the transmission of backhaul information is not limited to transmission via the backhaul DTX ON shown in FIG. 3, and FIG. 3 is only an example.

Optionally, at least one of the DTX on-duration and DTX off-duration of the DTX transmission having an association with DRX on-duration or off-duration of the UE, includes at least one of the following:
the DTX parameter information and/or parameter of the network node are used by the UE to determine at least one of DTX on-duration and DTX off-duration;
cycle of DTX transmission has an association with cycle of DRX transmission of the UE;
DTX on-duration of the DTX transmission has a first association with a signal, channel or message in DRX off-duration of the UE;
DTX on-duration of the DTX transmission has a second association with transmission content of a signal, channel or message in DRX off-duration of the UE;
DTX on-duration of the DTX transmission has a third association with communication behavior of the UE in DRX off-duration of the UE, and the communication behavior includes at least one of periodic behavior and a semi-persistent behavior.

The above DTX parameter information and/or the parameter information of the network node (such as the UE) used by the network node to determine at least one of the DTX on-duration and the DTX off-duration may include:
the DTX parameter information may directly determine at least one of the DTX on-duration and the DTX off-duration; or,
the network node (such as the UE) may determine at least one of the DTX on-duration and the DTX off-duration according to the DTX parameter information and the parameter information of the network node (such as the UE).

The above parameter information of the network node (such as the UE) may include UE DRX parameter, signal parameter, channel information parameter, and the like.

The above periodic behavior may include at least one of the following: periodic CG transmission, periodic measurement and/or periodic measurement reporting.

The above semi-persistent behavior may include at least one of the following: SPS PDSCH transmission, semi-persistent CG transmission, semi-persistent measurement, and semi-persistent measurement reporting.

The above associations of DTX on-duration of DTX transmission can be independent of each other, but the DTX on-duration of the network device can be determined according to at least one of the above four situations, or it can be limited to any one, any two, or any three, etc., but the network device finally determines only one DTX on-duration.

The above cycle of DTX transmission having an association with the cycle of UE's DRX transmission, and the above first association, second association and third association may be protocol-defined or pre-configured association relationships.
For example, the cycle of DTX transmission of the base station is consistent with the cycle of DRX transmission of the UE, or they have other associations;

The on-duration of DTX transmission of the base station has a first association with the signal, control channel, broadcast message and/or energy-saving signal during the DRX off-duration of the UE. The on-duration of DTX transmission of the base station has a first association with the energy-saving signal during the DRX off-duration of the UE, i.e., the on-duration of DTX transmission of the base station has a first association with digital copyright identifier (DCI) format 2_6, and/or CSI-RS/TRS signal, and/or SSB broadcast channel, and/or PDCCH, during the DRX off-duration of the UE. It should be noted that the first association is only used as an example for explanation here, and the specific description of the first, second, and third associations can refer to the following embodiments.

The on-duration of DTX transmission of the base station has an association with periodic behavior during the DRX off-duration of the UE, for example, the on-duration of DTX transmission of the base station has an association with SPS PDSCH transmission and/or CG transmission and/or periodic/semi-persistent measurement during the DRX off-duration of the UE.

Optionally, the DRX on-duration of the UE includes:
DRX on-duration of a target UE corresponding to the network device, where the target UE is a specific, some or all UEs corresponding to the network device.

The target UE may be one or more UEs. Similarly, the DRX off-duration of the UE includes:
DRX off-duration of a target UE corresponding to the network device, where the target UE is a specific, some or all UEs corresponding to the network device.

As an optional implementation, the determining, by the network node, at least one of a DTX on-duration and a DTX off-duration of DTX transmission of the network device, based on the parameter information, includes:
in case that DTX on-duration determined by the network node based on the parameter information does not match the DRX on-duration of the UE, determining, by the network node, at least one of the DTX on-duration and the DTX off-duration of the DTX transmission of the network device based on a preset criteria.

The above preset criteria may be criteria defined by a protocol or pre-configured by a network-side device.

The preset criteria may be a criteria for determining at least one of the DTX on-duration and the DTX off-duration based on at least one of protocol definition, parameter set, UE assistance information, and UE preference information. For example, the determining, by the network node, at least one of the DTX on-duration and the DTX off-duration of the DTX transmission of the network device based on a preset criteria, includes:
determining, by the network node, at least one of the DTX on-duration and the DTX off-duration of the DTX transmission of the network device based on at least one of the following:
protocol definition, parameter set, UE assistance information, UE preference information.

For example, the protocol stipulates that DTX on-duration of the base station at least includes DRX on-duration of the UE. In addition, it can further include some transmission behaviors of UE, such as retransmission, energy-saving signal reception, reception of TRS and other signal, etc.

The UE determines at least one of DRX on-duration and DRX off-duration of the base station, based on the first parameter set and/or the second parameter set included in the DTX parameter information sent by the base station, as well as the association of the UE's parameter information. The first parameter set may be a semi-static parameter related to the DTX on-duration; the second parameter set may be a parameter related to dynamical adjustment of the DTX on-duration. The first parameter set and the second parameter set may be different parameter sets or may be parameter sets with an intersection.

The UE indicates at least one of DTX on-duration and DTX off-duration of the base station according to the UE assistance information and/or the UE preference information.

In this implementation, in case that the DTX on-duration determined by the network node based on the DTX parameter information does not match the DRX on-duration of the UE, at least one of the DTX on-duration and the DTX off-duration can be determined based on the preset criteria, thereby saving power consumption of the UE and the network device.

In the embodiment of the present application, the network node receives DTX parameter information of the network device sent by the network device; the network node determines at least one of DTX on-duration and DTX off-duration of DTX transmission of the network device based on the parameter information; the network node receives DTX transmission of the network device based on at least one of the DTX on-duration and DTX off-duration of the DTX transmission. The network node at least includes a UE, and the network device at least includes a base station. In this way, the network device can be supported to perform DTX transmission, thereby saving power consumption of the network device.

Referring to FIG. 4, FIG. 4 is a flowchart of another DTX transmission method according to an embodiment of the present application. As shown in FIG. 4, the method includes the following steps:
Step 401: sending, by a network device, DTX parameter information of the network device to a network node;
Step 402: performing, by the network device, DTX transmission for the network node;
where the network node at least includes a UE, and the network device at least includes a base station.

Optionally, the parameter information is used to determine at least one of the following:
a starting position of DTX on-duration of DTX transmission;
an end position of DTX on-duration of DTX transmission;
duration of DTX on-duration of DTX transmission;
a starting position of DTX off-duration of DTX transmission;
an end position of DTX off-duration of DTX transmission;
duration of DTX off-duration of DTX transmission.

Optionally, the parameter information includes at least one of the following:
DTX cycle;
offset value of starting position of DTX on-duration;
starting position of DTX on-duration;
end position of DTX on-duration;
offset value of end position of DTX on-duration;
duration of DTX on-duration;
cycle of DTX on-duration;
offset value of starting position of DTX off-duration;
starting position of DTX off-duration;
end position of DTX off-duration;
offset value of end position of DTX off-duration;
duration of DTX off-duration;
cycle of DTX off-duration.

Optionally, the DTX parameter information is transmitted through at least one of the following: broadcast message, control signaling, and high-level signaling.

Optionally, the performing, by the network device, DTX transmission for the network node, includes at least one of the following:
transmitting, by the network device, during the DTX on-duration, at least one of the following to the network node: a message, a signal, or channel information;
performing, by the network device, a target behavior during the DTX off-duration, where the target behavior includes at least one of the following:
   transmitting part of signals;
   transmitting part of channel information;
   transmitting part of messages;
   transmitting part of measurement signals;
   receiving part of measurement reporting;
   stopping target transmission;
   transmitting messages according to message configuration of DTX off-duration;
   transmitting signals according to signal configuration of DTX off-duration;
   transmitting channel information according to channel information configuration of DTX off-duration.

Optionally, the transmitting part of signals at least includes: transmitting some signal.

The transmitting part of channel information includes at least one of the following: transmitting some data channel information, transmitting some control channel information.

The transmitting part of measurement signals includes at least one of the following: transmitting a periodic measurement signal, transmitting a semi-persistent measurement signal, and transmitting an aperiodic measurement signal.

The receiving part of measurement reporting includes at least one of the following: receiving a periodic measurement report, receiving a semi-persistent measurement report, and receiving an aperiodic measurement report.

The stopping target transmission includes at least one of the following:
stopping all transmission behaviors related to data transmission;
stopping transmitting some or all signals;
stopping transmitting some or all channel information;
stopping receiving some or all request messages;
stopping transmitting some or all measurement signals;
stopping starting some or all timers.

Optionally, the network device performs transmission behaviors corresponding to different time durations during the DTX on-duration and the DTX off-duration of the DTX transmission; and/or,
the network device perform transmission in different frequency domain resources during the DTX on-duration and the DTX off-duration of the DTX transmission, respectively; and/or,
the network device performs different transmission behaviors during the DTX on-duration and the DTX off-duration of the DTX transmission.

Optionally, at least one of the DTX on-duration and the DTX off-duration of the DTX transmission has an association with the DRX on-duration or DTX off-duration of the UE; and/or,
in the case that the network node also includes a core network node, at least one of the DTX on-duration and DTX off-duration of the DTX transmission is associated with transmission of backhaul information, and the backhaul information is information backhauled by the network device to the core network node.

Optionally, at least one of the DTX on-duration and DTX off-duration of the DTX transmission having an association with DRX on-duration or off-duration of the UE, includes at least one of the following:
the DTX parameter information and/or parameter of the network node are used by the UE to determine at least one of DTX on-duration and DTX off-duration;
cycle of DTX transmission has an association with cycle of DRX transmission of the UE;
DTX on-duration of the DTX transmission has a first association with a signal, channel or message in DRX off-duration of the UE;
DTX on-duration of the DTX transmission has a second association with transmission content of a signal, channel or message in DRX off-duration of the UE;
DTX on-duration of the DTX transmission has a third association with communication behavior of the UE in DRX off-duration of the UE, and the communication behavior includes at least one of periodic behavior and a semi-persistent behavior.

Optionally, the periodic behavior includes at least one of the following: periodic CG transmission, periodic measurement and/or periodic measurement reporting;
and/or,
the semi-persistent behavior includes at least one of the following: SPS PDSCH transmission, semi-persistent CG transmission, semi-persistent measurement, and semi-persistent measurement reporting.

Optionally, the DRX on-duration of the UE includes:
DRX on-duration of a target UE corresponding to the network device, where the target UE is a specific, some or all UEs corresponding to the network device.

Optionally, the parameter information is used to determine at least one of DTX on-duration and DTX off-duration of the DTX transmission, and the DTX on-duration and the DTX off-duration are determined based on at least one of the following:
protocol definition, parameter set, UE assistance information, and UE preference information.

It should be noted that this embodiment is an implementation of the network device corresponding to the embodiment shown in FIG. 2, its specific implementation can refer to the relevant description of the embodiment shown in FIG. 2 and the same beneficial effects can be achieved, which will not be repeated here to avoid repeated description.

The DTX transmission method provided in the embodiment of the present application is illustrated hereinafter with several embodiments:

### First embodiment

This embodiment mainly describes a first parameter set for DTX transmission of a base station, which is specifically as follows.

The base station sends parameter information of DTX transmission to the UE, where the parameter information of DTX transmission is used to determine starting time and/or end time and/or duration of on-duration (off-duration) of DTX transmission of the base station.

For UE in a connected state, the DTX parameter information is sent to the UE through at least one of high-level signaling, broadcast message and control signaling. The DTX parameter information on the base station side is associated with DRX-related parameters of the UE. For UE in an idle state, the DTX parameter information is sent to the UE through at least one of broadcast message, system message, control signaling and high-level signaling. Here, the control signaling includes L1 signaling and/or MAC layer signaling.

The above DTX parameter information includes a first parameter set and/or a second parameter set. The first parameter set is a semi-static parameter related to the DTX on-duration. The second parameter set is a parameter related to dynamical adjustment of the DTX on-duration. The first parameter set and the second parameter set may be different parameter sets or may be parameter sets with an intersection. The UE may determine the DTX on-duration of the base station based on the first parameter set and/or the second parameter set.

Taking the base station configuring on-duration of DTX transmission as an example, the parameter information of the DTX on-duration of the base station includes relevant parameters of a starting time and/or end time and/or duration of DTX on-duration, including at least one of the following:
DTX cycle;
offset value of starting position of DTX on-duration;
starting position of DTX on-duration;
end position of DTX on-duration;
offset value of end position of DTX on-duration;
duration of DTX on-duration;
cycle of DTX on-duration.

The determination of the DTX on-duration based on the above DTX parameter information is illustrated by examples, but is not limited to the following listed manners. The UE receives the parameter information about DTX of the base station, and further determines a starting time and/or end time and/or duration of the on-duration of the DTX transmission of the base station. For configuration method of the above DTX parameter information, specific examples include: DTX cycle, offset value of starting position of DTX on-duration and duration of DTX on-duration; or DTX cycle, offset value of starting position of DTX on-duration and offset value of end time of DTX on-duration; or starting time of DTX on-duration and end time of DTX on-duration; or cycle of DTX on-duration and duration of DTX on-duration, etc.

The above DTX parameter information is also applicable to the parameter information of the base station DTX transmission for the non-off-duration, for example: DTX duration + offset value of the starting position of the DTX off-duration + duration of the DTX off-duration, or DTX duration + offset value of the starting position of the DTX off-duration + offset value of the end time of the DTX off-duration, or start time of the DTX off-duration + end time of the DTX off-duration, or duration of the DTX off-duration + duration of the DTX off-duration, etc.

At least one of the DTX on-duration and the DTX off-duration is determined by the parameter information of the off-duration (DTX on-duration) of the DTX transmission of the base station and the parameters of the terminal, such as: the relevant parameters used to determine at least one of the DTX on-duration and the DTX off-duration are associated with the DRX transmission related parameters of the connected terminal, and the specific method used includes one or a combination of the following situations:
The duration of DTX transmission of the base station is equal to the DRX duration of the terminal, or is a multiple of the DRX duration of the terminal, or has a certain offset value with the DRX duration of the terminal;

The starting position of the off-duration (DTX on-duration) of the base station DTX transmission is the same as the starting position of the off-duration (DRX-on) of the terminal DTX transmission. The starting position of the off-duration (DTX on-duration) of the base station DTX transmission can be determined by at least one of the following, which is only used for example:
The offset value of the starting position of the base station DTX on-duration is equal to the offset value of the starting position of the terminal DRX;
The absolute time of the starting position of the base station DTX on-duration is equal to the absolute time of the starting position of the terminal DRX;
The offset value between the starting position of the base station DTX transmission cycle and the start time/end time of the terminal DRX cycle DRX-cycle, which may be greater than or equal to 0 or less than or equal to 0;

The offset value DTX on-duration-offset between the starting position of the off-duration (DTX on-duration) of the base station's DTX transmission and the starting position of the off-duration (DRX-on) of the terminal's DRX transmission, wherein DTX on-duration-offset may be a value greater than or equal to 0, or a value less than or equal to 0.

The duration of the off-duration (DTX on-duration) of the base station DTX transmission is the same as the duration of the off-duration (DRX-on) of the terminal DRX. The duration of the off-duration of the base station DTX can be determined by at least one of the following, which is only used for example:
The duration of the DTX on-duration, and/or the start time of the DTX on-duration + the end time of the DTX on-duration, etc.
the duration of the off-duration (DTX on-duration) of the base station DTX transmission and the duration of the off-duration (DRX-on) of the terminal DRX, such as: having a certain difference and/or being a multiple or fraction of the duration of the off-duration (DRX-on) of the terminal DRX and/or having a certain functional relationship, such as calculated based on the UE ID.

The end position of the off-duration (DTX on-duration) of the base station's DTX transmission is the same as the end position of the off-duration (DRX-on) of the terminal's DRX, or is offset by a value DTX on-duration-offset from the end position of the off-duration (DRX-on) of the terminal's DRX, where DTX on-duration-offset can be a value greater than or equal to 0, or a value less than or equal to 0.

The offset value between the end position of the off-duration of the base station's DTX transmission and the start time/end time of the terminal's DRX cycle.

At least one of the DTX on-duration and the DTX off-duration is determined by the parameter information of the off-duration (DTX on-duration) of the DTX transmission of the base station and the parameters of the terminal, such as: the relevant parameters used to determine at least one of the DTX on-duration and the DTX off-duration are associated with the broadcast message, channel and/or signal related parameters, and the specific method used includes one or a combination of the following situations:
The starting position/ending position of the off-duration of the base station DTX transmission is aligned with the position of a specific signal, such as CSI-RS/TRS, or a specific broadcast signal/channel, such as SSB, or has a certain offset value. For example: the starting position/ending position of the off-duration of the base station DTX transmission is the Nth SSB before/after the DRX cycle of a specific terminal or has a certain offset value from the SSB, and N is greater than or equal to 0. Another example: the starting position of the off-duration of the base station DTX transmission is the receiving position of the TRS before the DRX cycle of the terminal or has a certain offset value from the receiving position, or the receiving position of the energy-saving signal or has a certain offset value from the receiving position.

The end position of the off-duration of the base station DTX transmission is aligned with the position of a specific broadcast signal/channel, such as SSB. For example, the end position of the off-duration of the base station DTX transmission is the Mth SSB before/after the terminal DRX cycle or has a certain offset value from the SSB, and M is greater than or equal to 0.

The offset value may be an absolute time or an application delay.

After receiving the DTX parameter information sent by the base station, the terminal can directly obtain the start time and/or end time and/or duration of the off-duration of the DTX transmission according to the received DTX parameter information.

The terminal performs specific DTX off-duration behavior during the base station DTX off-duration. The specific DTX off-duration behavior can be partial reception of configured signals/channels/messages, or stop receiving configured signals/channels/messages. The specific reception behavior includes: SPS PDSCH reception, PDCCH monitoring, SR process, periodic/semi-persistent measurement, channel state information (CSI) measurement and other related behaviors.

For connected UEs, the above method can realize the alignment of the off-duration (DTX on-duration) of the DTX transmission of the base station and the off-duration (DTX on-duration) of the DRX transmission of the terminal. The same is applicable to the alignment of the inactive duration (DTX off-duration) of the DTX transmission of the base station and the inactive duration (DTX off-duration) of the DRX transmission of the terminal. The DTX transmission of the base station can be based on the DRX off-duration of a specific user in at least one user or user group, or it can be a specific position of the DRX off-duration of at least one user or user group, such as: the DRX off-duration of the terminal is the earliest starting position of the DRX off-duration of these users (user groups) to the last ending position of the DRX off-duration of these users (user groups). For another example: the DRX inactive duration of the terminal is the latest starting position of the DRX inactive duration of these users (user groups) to the earliest ending position of the DRX inactive duration of these users (user groups). In addition, in order to ensure that the off-duration of the DTX transmission of the base station will not be in the off-duration of the DTX transmission due to the large difference in the DRX off-duration of the terminal, and cannot enter the inactive duration to affect the energy saving of the base station, the base station can pre-configure the DRX off-duration of the terminal in a relatively concentrated time duration to ensure effective energy saving of the base station. The specific schematic diagram is shown in Figure 5.

The above scheme can achieve the following beneficial effects:
When the off-duration of the DTX of the base station is aligned with the off-duration of the DRX of the connected terminal, the base station only sends information or signals during the off-duration of the DRX of the terminal. At other times, the base station can reduce the sending of signals to sleep or shut down some devices, which can achieve the purpose of energy saving and power consumption. In addition, there is a certain correlation between the off-duration (non-off-duration) of the DTX of the base station and the parameters related to the DRX off-duration of the terminal. For example, the starting position of the DTX on-duration of the base station is earlier than the DRX off-duration of the terminal, which is convenient for the base station to send the signals required for time-frequency synchronization and channel measurement before the DRX off-duration of the terminal. For another example, the DTX on-duration of the base station ends later than the DRX off-duration of the terminal, which is convenient for the base station and other terminals to enter the non-activation state during the non-off-duration, saving a certain amount of energy consumption without affecting the terminal service transmission. Example 2:

This embodiment mainly describes the determination or dynamic determination of the off-duration of DTX transmission of the base station, and the associated DRX off-duration, as follows:
The base station sends DTX parameter information to the terminal, wherein the DTX parameter information is used to determine the start time and/or end time and/or duration of the off-duration of the base station DTX transmission.

For connected users, DTX parameter information is sent to the terminal through at least one of high-level signaling, broadcast messages, and control signaling, and the DTX parameter information on the base station side is associated with the DRX-related parameters of the terminal. For idle users, DTX transmission-related parameters are sent to the terminal through at least one of broadcast messages, system messages, control signaling, and high-level signaling.

The DTX parameter information sent by the base station includes at least a second parameter set, which is used to indicate the terminal to confirm the off-duration of the dynamically changing DTX transmission. This dynamically changing DTX on-duration can adapt to the dynamic service transmission of the terminal. The parameters in the second parameter set may have a second association relationship in time with at least one of the start time and/or end time and/or duration of the dynamically changing DRX off-duration of the terminal. Here, the relevant parameters of the dynamically changing DRX off-duration of the terminal include at least one of the following parameters:
Terminal inactivity timer;
Round-Trip Time (RRT) timer;
DRX end command;
Retransmission timer;
Contention random access timer;
Message B response window timer.

At least one or a combination of the following:
The end position of the DTX on-duration on the base station side is consistent with the timeout of the inactivation timer of the terminal or has a specific certain correlation relationship.

The end position of the DTX on-duration on the base station side is the same as or has a certain correlation with the start/stop/timeout time of the RTT timer of the terminal, such as: the RTT timer started by ACK feedback, or the RTT timer after the maximum number of retransmissions.

The end position of the DTX on-duration on the base station side is consistent with the DRX end command of the terminal or has a specific certain association relationship.

The end position of the DTX on-duration on the base station side is associated with the terminal retransmission process, such as: the same as or having a certain correlation with the start, stop and/or timeout time of the terminal retransmission timer, including: DRX downlink retransmission timer (drx-RetransmissionTimerDL), DRX uplink retransmission timer (drx-RetransmissionTimerUL), etc.

The end position of the DTX on-duration on the base station side is associated with the terminal random access process, such as: the time point is consistent with or has a certain offset value from the corresponding time point due to the timeout or stop of the contention random access timer (ra-ContentionResolutionTimer) or the timeout or stop of the message B response window timer (msgB-ResponseWindow) or the scheduling request is initiated on the PUCCH and is suspended or deleted.

The certain correlation relationship may be a certain offset value relationship between the two, or a multiple relationship, etc. The offset value may be an absolute time or an application delay.

After the terminal receives the DTX parameter information sent by the base station, it can obtain the start time and/or end time and/or duration of the off-duration of the DTX transmission based on the received DTX transmission parameter information, the association between at least one item of the DTX on-duration and the DTX off-duration and the terminal DRX transmission parameters, and the DRX off-duration related configuration.

The terminal performs specific DTX off-duration behavior during the base station DTX off-duration. The specific DTX off-duration behavior can be partial reception of configured signals/channels/messages, or stop receiving configured signals/channels/messages. The specific reception behavior includes: SPS PDSCH reception, PDCCH monitoring, SR process, periodic/semi-persistent measurement, CSI measurement and other related behaviors.

For connected UEs, the above method can achieve the alignment of the off-duration (DTX on-duration) of the base station's DTX transmission with the off-duration (DTX on-duration) of the terminal's DRX transmission, and is also applicable to the alignment of the inactive duration (DTX off-duration) of the base station's DTX transmission with the inactive duration (DTX off-duration) of the terminal's DRX transmission.

In addition, the off-duration of the base station DTX can be discontinuously transmitted (DTX) according to the DRX off-duration of a specific user in at least one user or user group, such as: the user with the earliest start of the DRX off-duration and/or the latest end of the DRX off-duration and/or the longest duration of the DRX off-duration; it can also be a specific position of the DRX off-duration of at least one user or user group, such as: the DRX off-duration of the terminal is the earliest starting position of the DRX off-duration of these users (user groups) to the last end position of the DRX off-duration of these users (user groups). Another example: the DRX off-duration of the terminal is the latest start position of the DRX off-duration of these users (user groups) to the earliest end position of the DRX off-duration of these users (user groups). The details are shown in the following figure. In addition, in order to ensure that the off-duration of the base station's DTX transmission will not be in the off-duration of DTX transmission due to a large difference in the DRX off-duration of the terminal, and will not be unable to enter the inactive duration to affect the energy saving of the base station, the base station can pre- configure the DRX off-duration of the terminal to a relatively concentrated time duration to ensure effective energy saving of the base station, as shown in Figure 6.

For example, when the cell is under low load, the base station can configure the DRX off-duration of at least one terminal within a certain time duration, the DTX on-duration of the base station can be the same as the starting time position of the time duration or earlier than the starting position of the time duration by a certain offset value, and the initial duration of the DTX on-duration is the same as the time duration or later than the end position of the time duration by a certain offset value. When the terminal receives new data within the DRX off-duration timer on-duration, the inactivity timer (Inactivity Timer) is turned on, or the RTT Timer is turned on due to retransmission, or the retransmission timer is turned on due to waiting for retransmission, or the contention resolution timer (ra-ContentionResolutionTimer) or the message B response window timer (msgB-ResponseWindow) is turned on due to random access triggered by beam failure recovery BFR, etc., resulting in the extension of the initial off-duration of the terminal, then the off-duration of the base station DTX will also be extended, and the end time is determined according to the second association relationship. In addition, if the base station triggers the terminal to end the DRX off-duration in advance, when sending a DRX command to the terminal, the DTX on-duration of the base station can also end in advance, and the end time can be further determined according to the second association relationship.

The above scheme can achieve the following beneficial effects:
The base station DTX on-duration can dynamically change according to the terminal off-duration to adapt to the DRX off-duration of at least one terminal that changes dynamically due to service transmission, so as to avoid the terminal transmission performance degradation caused by the mismatch between the base station off-duration and the terminal DRX off-duration.

### Embodiment three:

This embodiment mainly describes the determination or dynamic determination of the off-duration of DTX transmission of the base station, and the associated energy-saving signal, as follows:
The base station sends DTX parameter information to the terminal, wherein the DTX parameter information is used to determine the start time and/or end time and/or duration of the off-duration of the base station DTX transmission.

For connected users, DTX parameter information is sent to the terminal through at least one of high-level signaling, broadcast messages, and control signaling, and the DTX parameter information on the base station side is associated with the DRX-related parameters of the terminal. For idle users, DTX transmission-related parameters are sent to the terminal through at least one of broadcast messages, system messages, control signaling, and high-level signaling.

sent by the base station includes at least a second parameter set, which is used to indicate the terminal to confirm the off-duration of the dynamically changing DTX transmission. This dynamically changing DTX on-duration can adapt to the dynamic service transmission of the terminal. The parameters in the second parameter set have a third association relationship with the signal/control channel/broadcast message during the DRX off-duration of the terminal. The signal/control channel/broadcast message/energy-saving signal during the DRX off-duration of the terminal can be an energy-saving signal, such as DCI format 2_6, and/or TRS signal, and/or SSB broadcast channel, and/or PDCCH, etc.

For example: At least one or a combination of the following situations:
The starting position of the off-duration of the base station DTX transmission is consistent with the starting listening position of the energy-saving signal or has a certain correlation; here, the energy-saving signal can be an energy-saving signal for the connected state, such as: DCI format 2_6. The correlation relationship can be the starting listening position of the energy-saving signal, such as PS-offset, or it can have a certain offset value with the starting listening position PS-offset of the energy-saving signal, such as: a specific offset value before the energy-saving signal starts to be listened, or it can be the position of the Nth SSB before the energy-saving signal is listened or the position of a specific offset value from the Nth SSB.

The starting position of the off-duration of the base station DTX transmission is consistent with the receiving position of the TRS or has a certain offset relationship.

The end position of the off-duration of the base station DTX transmission is consistent with or has a certain correlation with the position where the energy-saving signal stops monitoring, such as the minimum time interval (MinTimeGap) from the start position of the DRX off-duration.

The end position of the off-duration of the base station DTX transmission has a certain correlation with the indication information of the energy-saving signal, for example:
If the energy saving signal indicates that the off-duration timer of the subsequent DRX cycle of the terminal is turned on, the end position of the DTX on-duration of the base station is aligned or partially aligned with the DRX off-duration of the terminal.

If the energy-saving signal indicates that the off-duration timer of the subsequent DRX cycle of the terminal is turned off, the end position of the DTX on-duration of the base station is a specific time position, such as: a specified time, a time that has a certain correlation with the energy-saving signal, and a certain correlation with the terminal DRX-related parameters.

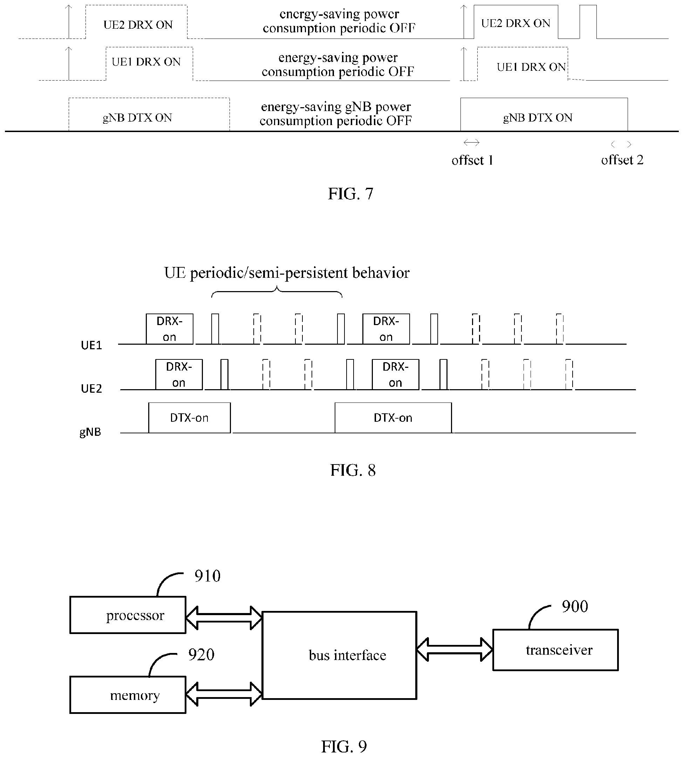

Here, the energy-saving signal includes but is not limited to DCI format 2_6, and the energy-saving signal is not limited to the bearer form, and can be an energy-saving signal based on the DCI format or an energy-saving signal based on a sequence. Specific details are shown in FIG. 7 below.

In addition, the energy-saving signal may be a signal carrying multiple users or user groups, or may be multiple energy-saving signals with known detection locations.

For example, the base station will send an energy-saving signal to the terminal, such as DCI format 2_6, according to whether the terminal currently has business transmission, to notify the terminal whether it needs to start the DRX off-duration timer, that is, onDurationTimer. The starting position of the DTX on-duration of the base station can be a specific offset value before the energy-saving signal starts to monitor the position, and the offset value is greater than or equal to 0. If there is no business transmission in the terminal in the cell, the base station notifies the terminal through the energy-saving signal that it is not necessary to start the DRX off-duration timer, that is, onDurationTimer. The end position of the DTX on-duration of the base station can be the end position of the energy-saving signal, such as DCI format 2_6, or a specific offset value from the end position of the energy-saving signal. If at least one terminal in the cell has business transmission, that is, the terminal needs to start the DRX off-duration timer, that is, onDurationTimer. The end position of the DTX on-duration of the base station can be the end position of the DRX off-duration of the terminal or a specific offset value from the end position of the DRX off-duration of the terminal. If at least one terminal in the cell has started a retransmission-related timer, such as an RTT timer or a retransmission timer, the end position of the DTX on-duration of the base station can be the end position of the timer or a certain offset value from the end position of the timer.

### Embodiment 4:

This embodiment mainly describes the determination or dynamic determination of the off-duration of the base station DTX transmission, and the association with the SPS PDSCH or CG, as follows:
The base station sends DTX parameter information to the terminal, wherein the DTX parameter information is used to determine the start time and/or end time and/or duration of the off-duration of the base station DTX transmission.

For connected users, DTX parameter information is sent to the terminal through at least one of high-level signaling, broadcast messages, and control signaling, and the DTX parameter information on the base station side is associated with the DRX-related parameters of the terminal. For idle users, DTX transmission-related parameters are sent to the terminal through at least one of broadcast messages, system messages, control signaling, and high-level signaling.

The base station DTX on-duration can also be dynamically changing, and the dynamically changing DTX on-duration at least includes the second parameter set, wherein. According to the second parameter set, the terminal can determine the start time and/or end time and/or duration of the dynamically changing DTX on-duration (non-off-duration) to adapt to the dynamic service transmission of the terminal. The off-duration (DTX on-duration) of the base station DTX transmission has a fourth association relationship with the periodic or semi-persistent behavior during the DRX non-off-duration of the terminal. The periodic behavior during the DRX non-off-duration of the terminal includes at least one of the following: SPS PDSCH transmission and/or CG transmission and/or periodic/semi-persistent measurement, etc., wherein periodic measurement, such as periodic CSI measurement, periodic RRM measurement, periodic RSRP or RSRQ measurement, etc. The base station DTX on-duration includes at least one or a combination of the following situations:
The starting position/ending position of the off-duration of the base station DTX transmission is consistent with the starting position of the SPS PDSCH transmission and/or CG transmission and/or periodic measurement or has a certain offset value. For example: the Nth SPS PDSCH and/or the Mth CG and/or the Kth periodic measurement during the terminal DRX non-off-duration. When M, N, K are all values greater than or equal to 0, it indicates the M, N, Kth periodic behavior during the non-off-duration in a specific DRX cycle. When M, N, K are all values less than or equal to 0, it indicates the M, N, Kth periodic behavior before the off-duration of a specific DRX cycle. There may also be a certain offset value from a specific periodic behavior. The specific schematic diagram is shown in Figure 8 below.
times the duration of the terminal's periodic behavior, where N is a value greater than or equal to zero.

The terminal receives the DTX parameter information configured by the base station, which includes at least the second parameter set, and may determine the off-duration of the DTX of the base station according to the configured periodic behavior.

In addition, the off-duration of the base station DTX can be based on the DRX off-duration of a specific user in at least one user or user group, such as: the user with the earliest start of the DRX off-duration and/or the latest end of the DRX off-duration and/or the longest duration of the DRX off-duration; it can also be a specific position of the DRX off-duration of at least one user or user group, such as: the DRX off-duration of the terminal is the earliest starting position of the DRX off-duration of these users (user groups) to the latest end position of the DRX off-duration of these users (user groups). For another example: the DRX off-duration of the terminal is the latest start position of the DRX off-duration of these users (user groups) to the earliest end position of the DRX off-duration of these users (user groups).

### Fifth embodiment

This embodiment mainly describes the behavior of the terminal during the DTX off-duration of the base station, which is as follows:
For periodic behavior in the base station DTX off-duration, the terminal can adopt at least one of the following methods:

Stop all periodic actions during the DTX off-duration.
some periodic behaviors during the DTX off-duration, for example: stop at least one of the following: SPS PDSCH transmission and/or CG transmission and/or periodic/semi-persistent measurement, etc., among which periodic measurement includes periodic CSI measurement, periodic RRM measurement, periodic RSRP or RSRQ measurement, etc.

According to the indication information on the base station side, stop specific periodic behaviors during the DTX off-duration (for example, stop periodic data transmission, such as SPS PDSCH transmission and/or CG transmission, etc.), and/or stop periodic CSI measurement, etc.

The terminal reports user preference information and customizes the periodic behavior during the DTX off-duration. For example, the terminal reports that it only receives TRS during the inactive duration.

The terminal sends a trigger signaling/signal/sequence to customize the terminal receiving behavior during the DTX off-duration. For example, the terminal sends a trigger signaling, such as HARQ-ACK, indicating that the terminal may not perform SPS PDSCH reception during the DTX off-duration.

### Sixth embodiment

This embodiment mainly describes determining the DTX on-duration according to the first criterion, which is as follows:
When the DTX on-duration configured by the base station does not match the DRX off-duration of the terminal, the terminal determines the DTX on-duration of the base station according to a first criterion. The first criterion refers to at least one of the following situations:

The protocol stipulates that the off-duration of the base station's DTX must at least include the off-duration of the terminal's DRX. In addition, it can further include some terminal transmission behaviors, such as: data retransmission, energy-saving signal reception, TRS, specific SSB and other signal reception, etc.

The terminal determines the off-duration of the base station DTX according to the first parameter set and/or the second parameter set configured by the base station and the association relationship of other configured parameters. See Embodiments 2 to 5 for details.

The terminal indicates the DTX on-duration of the base station according to the UE assistance information/user preference information.

For example: the base station is only configured with the first parameter set of DTX transmission, which can determine the off-duration of semi-static DTX transmission. When the terminal has data transmission, the terminal DRX off-duration will change dynamically according to the data transmission situation. In order to avoid affecting the data reception of the terminal, the protocol can be used to define that the off-duration of the base station's DTX must at least include the off-duration of the terminal DRX. When the terminal DRX off-duration is greater than the DTX on-duration configured by the base station, the terminal defaults to the end time of the base station's off-duration as the end time of the terminal DRX off-duration or a time with a certain offset value from the terminal off-duration. In addition, the protocol can also define that the base station DTX transmission needs to ensure the normal monitoring of the TRS and/or energy-saving signals and/or a specific number of SBBs before the terminal DRX off-duration, that is, the starting position of the DTX transmission off-duration must be equal to the monitoring position earlier than the TRS and/or energy-saving signals and/or a specific number of SBBs.

For another example: the terminal feeds back UE assistance information/user preference information, such as supporting TRS reception during the DRX inactive duration or only supporting SSB reception during the DRX inactive duration, then the DTX on-duration of the base station is determined specifically according to the TRS or SSB position.

In the embodiments of the present application, it is possible to ensure that the sending and receiving behaviors of the network device and the network node are consistent, reduce unnecessary static sending power consumption of the network device, and thus achieve energy saving of the network device.

Referring to FIG. 9, FIG. 9 is a schematic diagram of a network node according to an embodiment of the present application. As shown in FIG. 9, the network node includes a memory 920, a transceiver 900, and a processor 910.

The memory 920 is used to store a computer program; the transceiver 900 is used to send and receive data under the control of the processor 910. The processor 910 is used to read the computer program in the memory 920 and perform the following operations:
receiving DTX parameter information of a network device sent by the network device;
determining at least one of a DTX on-duration and a DTX off-duration of DTX transmission of the network device, based on the parameter information;
receiving the DTX transmission of the network device based on at least one of the DTX on-duration and the DTX off-duration of the DTX transmission.

The network node at least includes a UE, and the network device at least includes a base station.

In FIG. 9, a bus architecture may include any number of interconnected bus and bridge. Specifically, various circuits of one or more processors, which are represented by the processor 910, and one or more memories, which are represented by the memory 920, are linked together. The bus architecture may link various other circuits, such as a peripheral device, voltage regulator and a power management circuit together. These features are well known in this field; therefore, this disclosure does not make further description on these features. The bus interface provides an interface. The transceiver 910 may be multiple elements, including a transmitter and a receiver and provide units, which communicate with other devices on the transmission medium. For different UEs, a user interface 930 may be an interface that can be connected to external or internal devices. The connected devices include but are not limited to a small keyboard, a display, a speaker, a microphone, a joystick, etc.

The processor 910 is responsible for managing the bus architecture and the normal processing. The memory 920 may be used to store data used by the processor 910 for performing operations.

The processor 910 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

Optionally, the parameter information is used to determine at least one of the following:
a starting position of DTX on-duration of DTX transmission;
an end position of DTX on-duration of DTX transmission;
duration of DTX on-duration of DTX transmission;
a starting position of DTX off-duration of DTX transmission;
an end position of DTX off-duration of DTX transmission;
duration of DTX off-duration of DTX transmission.

Optionally, the parameter information includes at least one of the following:
DTX cycle;
offset value of starting position of DTX on-duration;
starting position of DTX on-duration;
end position of DTX on-duration;
offset value of end position of DTX on-duration;
duration of DTX on-duration;
cycle of DTX on-duration;
offset value of starting position of DTX off-duration;
starting position of DTX off-duration;
end position of DTX off-duration;
offset value of end position of DTX off-duration;
duration of DTX off-duration;
cycle of DTX off-duration.

Optionally, the DTX parameter information is received through at least one of the following: broadcast message, control signaling, and high-level signaling.

Optionally, the receiving the DTX transmission of the network device based on at least one of DTX on-duration and DTX off-duration of the DTX transmission includes at least one of the following:
receiving, during the DTX on-duration, at least one of the following items sent by the network device: a message, a signal, or channel information;
performing a target behavior during the DTX off-duration, where the target behavior includes at least one of the following:
   receiving part of signals;
   receiving part of channel information;
   receiving part of messages;
   performing part of measurements;
   performing part of measurement reporting;
   stopping target reception;
   receiving messages according to message configuration of DTX off-duration;
   receiving signals according to signal configuration of DTX off-duration;
   receiving channel information according to channel information configuration of DTX off-duration.

Optionally, the receiving part of signals may at least include: receiving some signals.

The receiving part of channel information may include at least one of the following: receiving some data channel information, receiving some control channel information.

The performing part of measurements may include at least one of the following: periodic measurement, semi-persistent measurement, aperiodic measurement.

The performing part of measurement reporting may include at least one of the following: periodic measurement reporting, semi-persistent measurement reporting, and aperiodic measurement reporting.

The stopping target reception may include at least one of the following:
stopping all reception behaviors related to data transmission;
stopping receiving some or all signals;
stopping receiving some or all channel information;
stopping transmitting some or all request messages;
stopping some or all measurements;
stopping starting some or all timers.

Optionally, the network node performs receiving behaviors corresponding to different time durations during the DTX on-duration and the DTX off-duration of the DTX transmission; and/or,
the network node perform reception in different frequency domain resources during the DTX on-duration and the DTX off-duration of the DTX transmission, respectively; and/or,
the network node performs different receiving behaviors during the DTX on-duration and the DTX off-duration of the DTX transmission.

Optionally, at least one of the DTX on-duration and the DTX off-duration of the DTX transmission has an association with the DRX on-duration or DTX off-duration of the UE;
and/or,
in the case that the network node also includes a core network node, at least one of the DTX on-duration and DTX off-duration of the DTX transmission is associated with transmission of backhaul information, and the backhaul information is information backhauled by the network device to the core network node.

Optionally, at least one of the DTX on-duration and DTX off-duration of the DTX transmission having an association with DRX on-duration or off-duration of the UE, includes at least one of the following:
the DTX parameter information and/or parameter of the network node are used by the UE to determine at least one of DTX on-duration and DTX off-duration;
cycle of DTX transmission has an association with cycle of DRX transmission of the UE;
DTX on-duration of the DTX transmission has a first association with a signal, channel or message in DRX off-duration of the UE;
DTX on-duration of the DTX transmission has a second association with transmission content of a signal, channel or message in DRX off-duration of the UE;
DTX on-duration of the DTX transmission has a third association with communication behavior of the UE in DRX off-duration of the UE, and the communication behavior includes at least one of periodic behavior and a semi-persistent behavior.

Optionally, the periodic behavior may include at least one of the following: periodic CG transmission, periodic measurement and/or periodic measurement reporting;
and/or,
the semi-persistent behavior may include at least one of the following: SPS PDSCH transmission, semi-persistent CG transmission, semi-persistent measurement, and semi-persistent measurement reporting.

Optionally, the DRX on-duration of the UE includes:
DRX on-duration of a target UE corresponding to the network device, where the target UE is a specific, some or all UEs corresponding to the network device.

Optionally, the determining, by the network node, at least one of a DTX on-duration and a DTX off-duration of DTX transmission of the network device, based on the parameter information, includes:
in case that DTX on-duration determined by the network node based on the parameter information does not match the DRX on-duration of the UE, determining, by the network node, at least one of the DTX on-duration and the DTX off-duration of the DTX transmission of the network device based on a preset criteria.

Optionally, the determining, by the network node, at least one of the DTX on-duration and the DTX off-duration of the DTX transmission of the network device based on a preset criteria, includes:
determining, by the network node, at least one of the DTX on-duration and the DTX off-duration of the DTX transmission of the network device based on at least one of the following:
protocol definition, parameter set, UE assistance information, UE preference information.

It is to be noted here that the above network node provided in the embodiment of the present disclosure can implement all the method steps implemented in the above method embodiment, and can achieve the same technical effect. The parts and beneficial effects of this embodiment that are the same as those in the method embodiment will not be described in detail here.

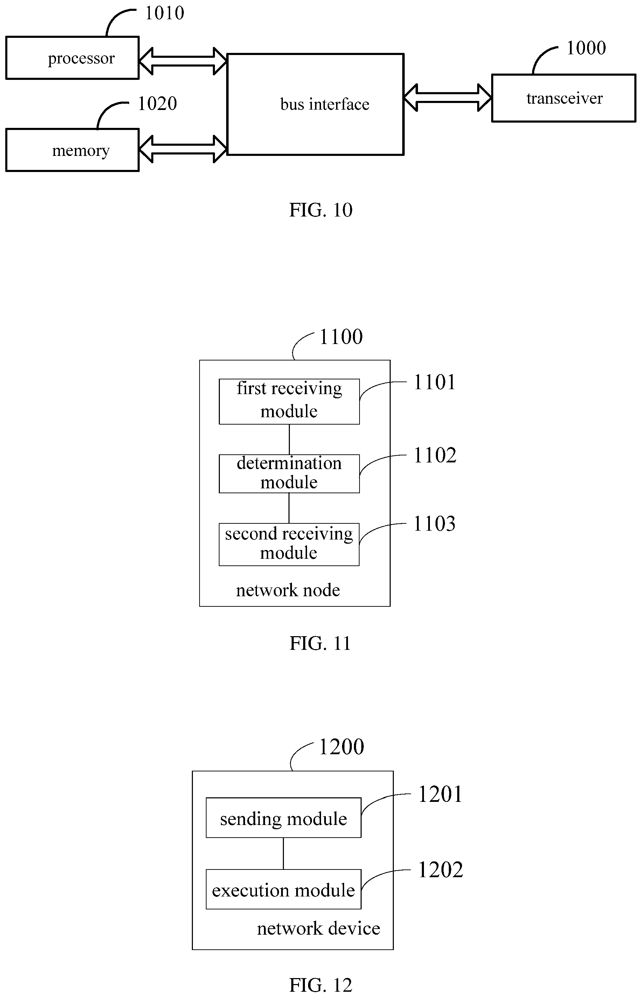

Referring to FIG. 10, FIG. 10 is a schematic diagram of a network device according to an embodiment of the present application. As shown in FIG. 10, the network device includes a memory 1020, a transceiver 1000, and a processor 1010.

The memory 1020 is used to store a computer program; the transceiver 1000 is used to send and receive data under the control of the processor 1010. The processor 1010 is used to read the computer program in the memory 1020 and perform the following operations:
send DTX parameter information of the network device to a network node;
performing DTX transmission for the network node;
where the network node at least includes a UE, and the network device at least includes a base station.

In FIG. 10, a bus architecture may include any number of interconnected bus and bridge. Specifically, various circuits of one or more processors, which are represented by the processor 1010, and one or more memories, which are represented by the memory 1020, are linked together. The bus architecture may link various other circuits, such as a peripheral device, voltage regulator and a power management circuit together. These features are well known in this field; therefore, this disclosure does not make further description on these features. The bus interface provides an interface. The transceiver 1010 may be multiple elements, including a transmitter and a receiver and provide units, which communicate with other devices on the transmission medium. The transmission medium includes radio channels, wired channels, optical cables, etc. For different UEs, a user interface 1030 may be an interface that can be connected to external or internal devices. The connected devices include but are not limited to a small keyboard, a display, a speaker, a microphone, a joystick, etc.

The processor 1010 is responsible for managing the bus architecture and the normal processing. The memory 1020 may be used to store data used by the processor 1010 for performing operations.

The processor 1010 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

Optionally, the parameter information is used to determine at least one of the following:
a starting position of DTX on-duration of DTX transmission;
an end position of DTX on-duration of DTX transmission;
duration of DTX on-duration of DTX transmission;
a starting position of DTX off-duration of DTX transmission;
an end position of DTX off-duration of DTX transmission;
duration of DTX off-duration of DTX transmission.

Optionally, the parameter information includes at least one of the following:
DTX cycle;
offset value of starting position of DTX on-duration;
starting position of DTX on-duration;
end position of DTX on-duration;
offset value of end position of DTX on-duration;
duration of DTX on-duration;
cycle of DTX on-duration;
offset value of starting position of DTX off-duration;
starting position of DTX off-duration;
end position of DTX off-duration;
offset value of end position of DTX off-duration;
duration of DTX off-duration;
cycle of DTX off-duration.

Optionally, the DTX parameter information is sent through at least one of the following: broadcast message, control signaling, and high-level signaling.

Optionally, the performing DTX transmission for the network node, includes at least one of the following:
transmitting, during the DTX on-duration, at least one of the following to the network node: a message, a signal, or channel information;
performing a target behavior during the DTX off-duration, wherein the target behavior includes at least one of the following:
   transmitting part of signals;
   transmitting part of channel information;
   transmitting part of messages;
   transmitting part of measurement signals;
   receiving part of measurement reporting;
   stopping target transmission;
   transmitting messages according to message configuration of DTX off-duration;
   transmitting signals according to signal configuration of DTX off-duration;
   transmitting channel information according to channel information configuration of DTX off-duration.

Optionally, the transmitting part of signals at least includes: transmitting some signal.

The transmitting part of channel information includes at least one of the following: transmitting some data channel information, transmitting some control channel information.

The transmitting part of measurement signals includes at least one of the following: transmitting a periodic measurement signal, transmitting a semi-persistent measurement signal, and transmitting an aperiodic measurement signal.

The receiving part of measurement reporting includes at least one of the following: receiving a periodic measurement report, receiving a semi-persistent measurement report, and receiving an aperiodic measurement report.

The stopping target transmission includes at least one of the following:
stopping all transmission behaviors related to data transmission;
stopping transmitting some or all signals;
stopping transmitting some or all channel information;
stopping receiving some or all request messages;
stopping transmitting some or all measurement signals;
stopping starting some or all timers.

Optionally, the network device performs transmission behaviors corresponding to different time durations during the DTX on-duration and the DTX off-duration of the DTX transmission; and/or,
the network device perform transmission in different frequency domain resources during the DTX on-duration and the DTX off-duration of the DTX transmission, respectively; and/or,
the network device performs different transmission behaviors during the DTX on-duration and the DTX off-duration of the DTX transmission.

Optionally, at least one of the DTX on-duration and the DTX off-duration of the DTX transmission has an association with the DRX on-duration or DTX off-duration of the UE; and/or,
in the case that the network node also includes a core network node, at least one of the DTX on-duration and DTX off-duration of the DTX transmission is associated with transmission of backhaul information, and the backhaul information is information backhauled by the network device to the core network node.

Optionally, at least one of the DTX on-duration and DTX off-duration of the DTX transmission having an association with DRX on-duration or off-duration of the UE, includes at least one of the following:
the DTX parameter information and/or parameter of the network node are used by the UE to determine at least one of DTX on-duration and DTX off-duration;
cycle of DTX transmission has an association with cycle of DRX transmission of the UE;
DTX on-duration of the DTX transmission has a first association with a signal, channel or message in DRX off-duration of the UE;
DTX on-duration of the DTX transmission has a second association with transmission content of a signal, channel or message in DRX off-duration of the UE;

DTX on-duration of the DTX transmission has a third association with communication behavior of the UE in DRX off-duration of the UE, and the communication behavior includes at least one of periodic behavior and a semi-persistent behavior.

Optionally, the periodic behavior includes at least one of the following: periodic CG transmission, periodic measurement and/or periodic measurement reporting;
and/or,
the semi-persistent behavior includes at least one of the following: SPS PDSCH transmission, semi-persistent CG transmission, semi-persistent measurement, and semi-persistent measurement reporting.

Optionally, the DRX on-duration of the UE includes:
DRX on-duration of a target UE corresponding to the network device, where the target UE is a specific, some or all UEs corresponding to the network device.

Optionally, the parameter information is used to determine at least one of DTX on-duration and DTX off-duration of the DTX transmission, and the DTX on-duration and the DTX off-duration are determined based on at least one of the following:
protocol definition, parameter set, UE assistance information, and UE preference information.

It is to be noted here that the above network device provided in the embodiment of the present disclosure can implement all the method steps implemented in the above method embodiment, and can achieve the same technical effect. The parts and beneficial effects of this embodiment that are the same as those in the method embodiment will not be described in detail here.

Referring to FIG. 11, FIG. 11 is a schematic diagram of another network node according to an embodiment of the present application. As shown in FIG. 11, the network node 1100 includes:
a first receiving module 1101 used to receive DTX parameter information of a network device sent by the network device;
a determination module 1102 used to determine at least one of a DTX on-duration and a DTX off-duration of DTX transmission of the network device, based on the parameter information;
a second receiving module 1103 used to receive the DTX transmission of the network device based on at least one of the DTX on-duration and the DTX off-duration of the DTX transmission.

The network node at least includes a UE, and the network device at least includes a base station.

Optionally, the parameter information is used to determine at least one of the following:
a starting position of DTX on-duration of DTX transmission;
an end position of DTX on-duration of DTX transmission;
duration of DTX on-duration of DTX transmission;
a starting position of DTX off-duration of DTX transmission;
an end position of DTX off-duration of DTX transmission;
duration of DTX off-duration of DTX transmission.

Optionally, the parameter information includes at least one of the following:
DTX cycle;
offset value of starting position of DTX on-duration;
starting position of DTX on-duration;
end position of DTX on-duration;
offset value of end position of DTX on-duration;
duration of DTX on-duration;
cycle of DTX on-duration;
offset value of starting position of DTX off-duration;
starting position of DTX off-duration;
end position of DTX off-duration;
offset value of end position of DTX off-duration;
duration of DTX off-duration;
cycle of DTX off-duration.

Optionally, the DTX parameter information is received through at least one of the following: broadcast message, control signaling, and high-level signaling.

Optionally, the second receiving module 1103 is used to perform at least one of the following:
receiving, during the DTX on-duration, at least one of the following items sent by the network device: a message, a signal, or channel information;
performing a target behavior during the DTX off-duration, where the target behavior includes at least one of the following:
   receiving part of signals;
   receiving part of channel information;
   receiving part of messages;
   performing part of measurements;
   performing part of measurement reporting;
   stopping target reception;
   receiving messages according to message configuration of DTX off-duration;
   receiving signals according to signal configuration of DTX off-duration;
   receiving channel information according to channel information configuration of DTX off-duration.

Optionally, the receiving part of signals may at least include: receiving some signals.

The receiving part of channel information may include at least one of the following: receiving some data channel information, receiving some control channel information.

The performing part of measurements may include at least one of the following: periodic measurement, semi-persistent measurement, aperiodic measurement.

The performing part of measurement reporting may include at least one of the following: periodic measurement reporting, semi-persistent measurement reporting, and aperiodic measurement reporting.

The stopping target reception may include at least one of the following:
stopping all reception behaviors related to data transmission;
stopping receiving some or all signals;
stopping receiving some or all channel information;
stopping transmitting some or all request messages;
stopping some or all measurements;
stopping starting some or all timers.

Optionally, the network node performs receiving behaviors corresponding to different time durations during the DTX on-duration and the DTX off-duration of the DTX transmission; and/or,
the network node perform reception in different frequency domain resources during the DTX on-duration and the DTX off-duration of the DTX transmission, respectively; and/or,
the network node performs different receiving behaviors during the DTX on-duration and the DTX off-duration of the DTX transmission.

Optionally, at least one of the DTX on-duration and the DTX off-duration of the DTX transmission has an association with the DRX on-duration or DTX off-duration of the UE;
and/or,
in the case that the network node also includes a core network node, at least one of the DTX on-duration and DTX off-duration of the DTX transmission is associated with transmission of backhaul information, and the backhaul information is information backhauled by the network device to the core network node.

Optionally, at least one of the DTX on-duration and DTX off-duration of the DTX transmission having an association with DRX on-duration or off-duration of the UE, includes at least one of the following:
the DTX parameter information and/or parameter of the network node are used by the UE to determine at least one of DTX on-duration and DTX off-duration;
cycle of DTX transmission has an association with cycle of DRX transmission of the UE;
DTX on-duration of the DTX transmission has a first association with a signal, channel or message in DRX off-duration of the UE;
DTX on-duration of the DTX transmission has a second association with transmission content of a signal, channel or message in DRX off-duration of the UE;

DTX on-duration of the DTX transmission has a third association with communication behavior of the UE in DRX off-duration of the UE, and the communication behavior includes at least one of periodic behavior and a semi-persistent behavior.

Optionally, the periodic behavior may include at least one of the following: periodic CG transmission, periodic measurement and/or periodic measurement reporting;
and/or,
the semi-persistent behavior may include at least one of the following: SPS PDSCH transmission, semi-persistent CG transmission, semi-persistent measurement, and semi-persistent measurement reporting.

Optionally, the DRX on-duration of the UE includes:
DRX on-duration of a target UE corresponding to the network device, where the target UE is a specific, some or all UEs corresponding to the network device.

Optionally, the determining, by the network node, at least one of a DTX on-duration and a DTX off-duration of DTX transmission of the network device, based on the parameter information, includes:
in case that DTX on-duration determined by the network node based on the parameter information does not match the DRX on-duration of the UE, determining, by the network node, at least one of the DTX on-duration and the DTX off-duration of the DTX transmission of the network device based on a preset criteria.

Optionally, the determining, by the network node, at least one of the DTX on-duration and the DTX off-duration of the DTX transmission of the network device based on a preset criteria, includes:
determining, by the network node, at least one of the DTX on-duration and the DTX off-duration of the DTX transmission of the network device based on at least one of the following:
protocol definition, parameter set, UE assistance information, UE preference information.

It is to be noted here that the above network node provided in the embodiment of the present disclosure can implement all the method steps implemented in the above method embodiment, and can achieve the same technical effect. The parts and beneficial effects of this embodiment that are the same as those in the method embodiment will not be described in detail here.

Referring to FIG. 12, FIG. 12 is a schematic diagram of another network device according to an embodiment of the present application. As shown in FIG. 12, the network device 1200 includes:
a sending module 1201 used to send DTX parameter information of the network device to a network node;
an execution module 1202 used to perform DTX transmission for the network node;
where the network node at least includes a UE, and the network device at least includes a base station.

Optionally, the parameter information is used to determine at least one of the following:
a starting position of DTX on-duration of DTX transmission;
an end position of DTX on-duration of DTX transmission;
duration of DTX on-duration of DTX transmission;
a starting position of DTX off-duration of DTX transmission;
an end position of DTX off-duration of DTX transmission;
duration of DTX off-duration of DTX transmission.

Optionally, the parameter information includes at least one of the following:
DTX cycle;
offset value of starting position of DTX on-duration;
starting position of DTX on-duration;
end position of DTX on-duration;
offset value of end position of DTX on-duration;
duration of DTX on-duration;
cycle of DTX on-duration;
offset value of starting position of DTX off-duration;
starting position of DTX off-duration;
end position of DTX off-duration;
offset value of end position of DTX off-duration;
duration of DTX off-duration;
cycle of DTX off-duration.

Optionally, the DTX parameter information is sent through at least one of the following: broadcast message, control signaling, and high-level signaling.

Optionally, the execution module 1202 is used to perform at least one of the following:
transmitting, during the DTX on-duration, at least one of the following to the network node: a message, a signal, or channel information;
performing a target behavior during the DTX off-duration, wherein the target behavior includes at least one of the following:
   transmitting part of signals;
   transmitting part of channel information;
   transmitting part of messages;
   transmitting part of measurement signals;
   receiving part of measurement reporting;
   stopping target transmission;
   transmitting messages according to message configuration of DTX off-duration;
   transmitting signals according to signal configuration of DTX off-duration;
   transmitting channel information according to channel information configuration of DTX off-duration.

Optionally, the transmitting part of signals at least includes: transmitting some signal.

The transmitting part of channel information includes at least one of the following: transmitting some data channel information, transmitting some control channel information.

The transmitting part of measurement signals includes at least one of the following: transmitting a periodic measurement signal, transmitting a semi-persistent measurement signal, and transmitting an aperiodic measurement signal.

The receiving part of measurement reporting includes at least one of the following: receiving a periodic measurement report, receiving a semi-persistent measurement report, and receiving an aperiodic measurement report.

The stopping target transmission includes at least one of the following:
stopping all transmission behaviors related to data transmission;
stopping transmitting some or all signals;
stopping transmitting some or all channel information;
stopping receiving some or all request messages;
stopping transmitting some or all measurement signals;
stopping starting some or all timers.

Optionally, the network device performs transmission behaviors corresponding to different time durations during the DTX on-duration and the DTX off-duration of the DTX transmission; and/or,
the network device perform transmission in different frequency domain resources during the DTX on-duration and the DTX off-duration of the DTX transmission, respectively; and/or,
the network device performs different transmission behaviors during the DTX on-duration and the DTX off-duration of the DTX transmission.

Optionally, at least one of the DTX on-duration and the DTX off-duration of the DTX transmission has an association with the DRX on-duration or DTX off-duration of the UE; and/or,
in the case that the network node also includes a core network node, at least one of the DTX on-duration and DTX off-duration of the DTX transmission is associated with transmission of backhaul information, and the backhaul information is information backhauled by the network device to the core network node.

Optionally, at least one of the DTX on-duration and DTX off-duration of the DTX transmission having an association with DRX on-duration or off-duration of the UE, includes at least one of the following:
the DTX parameter information and/or parameter of the network node are used by the UE to determine at least one of DTX on-duration and DTX off-duration;
cycle of DTX transmission has an association with cycle of DRX transmission of the UE;
DTX on-duration of the DTX transmission has a first association with a signal, channel or message in DRX off-duration of the UE;
DTX on-duration of the DTX transmission has a second association with transmission content of a signal, channel or message in DRX off-duration of the UE;
DTX on-duration of the DTX transmission has a third association with communication behavior of the UE in DRX off-duration of the UE, and the communication behavior includes at least one of periodic behavior and a semi-persistent behavior.

Optionally, the periodic behavior includes at least one of the following: periodic CG transmission, periodic measurement and/or periodic measurement reporting;
and/or,
the semi-persistent behavior includes at least one of the following: SPS PDSCH transmission, semi-persistent CG transmission, semi-persistent measurement, and semi-persistent measurement reporting.

Optionally, the DRX on-duration of the UE includes:
DRX on-duration of a target UE corresponding to the network device, where the target UE is a specific, some or all UEs corresponding to the network device.

Optionally, the parameter information is used to determine at least one of DTX on-duration and DTX off-duration of the DTX transmission, and the DTX on-duration and the DTX off-duration are determined based on at least one of the following:
protocol definition, parameter set, UE assistance information, and UE preference information.

It is to be noted here that the above network device provided in the embodiment of the present disclosure can implement all the method steps implemented in the above method embodiment, and can achieve the same technical effect. The parts and beneficial effects of this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which includes a program stored thereon. The program is used to cause a processor to execute the DTX transmission method on the network node side provided in the embodiment of the present application, or to execute the DTX transmission method on the network device side provided in the embodiment of the present application.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A discontinuous transmission (DTX) transmission method, comprising:
receiving, by a network node, DTX parameter information of a network device sent by the network device;
determining, by the network node, at least one of a DTX on-duration and a DTX off-duration of DTX transmission of the network device, based on the parameter information;
receiving, by the network node, the DTX transmission of the network device based on at least one of the DTX on-duration and the DTX off-duration of the DTX transmission;
wherein the network node at least includes a user equipment (UE), and the network device at least includes a base station.

2. The method according to claim 1, wherein the parameter information is used to determine at least one of the following:
a starting position of the DTX on-duration of the DTX transmission;
an end position of the DTX on-duration of the DTX transmission;
duration of the DTX on-duration of the DTX transmission;
a starting position of DTX off-duration of the DTX transmission;
an end position of the DTX off-duration of the DTX transmission;
duration of the DTX off-duration of the DTX transmission.

3. The method according to claim 1, wherein the parameter information includes at least one of the following:
DTX cycle;
an offset value of a starting position of the DTX on-duration;
a starting position of the DTX on-duration;
an end position of the DTX on-duration;
an offset value of the end position of the DTX on-duration;
duration of the DTX on-duration;
cycle of the DTX on-duration;
an offset value of a starting position of the DTX off-duration;
a starting position of the DTX off-duration;
an end position of the DTX off-duration;
an offset value of an end position of the DTX off-duration;
duration of the DTX off-duration;
cycle of the DTX off-duration.

4. The method according to claim 1, wherein the DTX parameter information is received through at least one of the following: broadcast message, control signaling, and high-level signaling.

5. The method according to claim 1, wherein the receiving, by the network node, the DTX transmission of the network device based on at least one of the DTX on-duration and the DTX off-duration of the DTX transmission, includes at least one of the following:
receiving, by the network node, during the DTX on-duration, at least one of the following items sent by the network device: a message, a signal, or channel information;
performing, by the network node, a target behavior during the DTX off-duration, wherein the target behavior includes at least one of the following:
receiving part of signals;
receiving part of channel information;
receiving part of messages;
performing part of measurements;
performing part of measurement reporting;
stopping target reception;
receiving messages according to message configuration of DTX off-duration;
receiving signals according to signal configuration of DTX off-duration;
receiving channel information according to channel information configuration of DTX off-duration.

6. The method according to claim 5, wherein the receiving part of signals at least includes: receiving some signals;
the receiving part of channel information includes at least one of the following: receiving some data channel information, receiving some control channel information;
the performing part of measurements includes at least one of the following: periodic measurement, semi-persistent measurement, aperiodic measurement;
the performing part of measurement reporting includes at least one of the following: periodic measurement reporting, semi-persistent measurement reporting, and aperiodic measurement reporting;
the stopping target reception includes at least one of the following: stopping all reception behaviors related to data transmission; stopping receiving some or all signals; stopping receiving some or all channel information; stopping transmitting some or all request messages; stopping some or all measurements; stopping starting some or all timers.

7. The method according to any one of claims 1 to 6, wherein the network node performs receiving behaviors corresponding to different time durations during the DTX on-duration and the DTX off-duration of the DTX transmission; and/or,
the network node perform reception in different frequency domain resources during the DTX on-duration and the DTX off-duration of the DTX transmission, respectively; and/or,
the network node performs different receiving behaviors during the DTX on-duration and the DTX off-duration of the DTX transmission.

8. The method according to any one of claims 1 to 6, wherein at least one of the DTX on-duration and the DTX off-duration of the DTX transmission has an association with DRX on-duration or DTX off-duration of the UE; and/or,
in the case that the network node further includes a core network node, at least one of the DTX on-duration and DTX off-duration of the DTX transmission is associated with transmission of backhaul information, and the backhaul information is information backhauled by the network device to the core network node.

9. The method according to claim 8, wherein at least one of the DTX on-duration and DTX off-duration of the DTX transmission having an association with the DRX on-duration or off-duration of the UE, includes at least one of the following:
the DTX parameter information and/or parameters of the UE are used by the UE to determine at least one of the DTX on-duration and DTX off-duration;
cycle of the DTX transmission has an association with cycle of DRX transmission of the UE;
the DTX on-duration of the DTX transmission has a first association with a signal, channel or message in the DRX off-duration of the UE;
the DTX on-duration of the DTX transmission has a second association with transmission content of a signal, channel or message in the DRX off-duration of the UE;
the DTX on-duration of the DTX transmission has a third association with communication behavior of the UE in the DRX off-duration of the UE, and the communication behavior includes at least one of periodic behavior and a semi-persistent behavior.

10. The method according to claim 9, wherein the periodic behavior includes at least one of the following: periodic (configured grant) CG transmission, periodic measurement and/or periodic measurement reporting;
and/or,
the semi-persistent behavior includes at least one of the following: semi-persistent scheduling (SPS) physical downlink shared channel (PDSCH) transmission, semi-persistent CG transmission, semi-persistent measurement, and semi-persistent measurement reporting.

11. The method according to claim 8, wherein the DRX on-duration of the UE includes:
DRX on-duration of a target UE corresponding to the network device, wherein the target UE is a specific, some or all UEs corresponding to the network device.

12. The method according to any one of claims 1 to 6, wherein the determining, by the network node, at least one of the DTX on-duration and the DTX off-duration of the DTX transmission of the network device, based on the parameter information, includes:
in case that DTX on-duration determined by the network node based on the parameter information does not match DRX on-duration of the UE, determining, by the network node, at least one of the DTX on-duration and the DTX off-duration of the DTX transmission of the network device based on a preset criteria.

13. The method according to claim 12, wherein the determining, by the network node, at least one of the DTX on-duration and the DTX off-duration of the DTX transmission of the network device based on a preset criteria, includes:
determining, by the network node, at least one of the DTX on-duration and the DTX off-duration of the DTX transmission of the network device based on at least one of the following:
protocol definition, parameter set, UE assistance information, UE preference information.

14. A discontinuous transmission (DTX) transmission method, comprising:
sending, by a network device, DTX parameter information of the network device to a network node;
performing, by the network device, DTX transmission for the network node;
wherein the network node at least includes a user equipment (UE), and the network device at least includes a base station.

15. The method according to claim 14, wherein the parameter information is used to determine at least one of the following:
a starting position of DTX on-duration of the DTX transmission;
an end position of DTX on-duration of the DTX transmission;
duration of DTX on-duration of the DTX transmission;
a starting position of DTX off-duration of the DTX transmission;
an end position of DTX off-duration of the DTX transmission;
duration of DTX off-duration of the DTX transmission.

16. The method according to claim 14, wherein the parameter information includes at least one of the following:
DTX cycle;
an offset value of a starting position of DTX on-duration;
a starting position of the DTX on-duration;
an end position of the DTX on-duration;
an offset value of the end position of the DTX on-duration;
duration of the DTX on-duration;
cycle of the DTX on-duration;
an offset value of a starting position of DTX off-duration;
a starting position of the DTX off-duration;
an end position of the DTX off-duration;
an offset value of an end position of the DTX off-duration;
duration of the DTX off-duration;
cycle of the DTX off-duration.

17. The method according to claim 14, wherein the DTX parameter information is transmitted through at least one of the following: broadcast message, control signaling, and high-level signaling.

18. The method according to claim 14, wherein the performing, by the network device, DTX transmission for the network node, includes at least one of the following:
transmitting, by the network device, during DTX on-duration, at least one of the following to the network node: a message, a signal, or channel information;
performing, by the network device, a target behavior during DTX off-duration, wherein the target behavior includes at least one of the following:
transmitting part of signals;
transmitting part of channel information;
transmitting part of messages;
transmitting part of measurement signals;
receiving part of measurement reporting;
stopping target transmission;
transmitting messages according to message configuration of DTX off-duration;
transmitting signals according to signal configuration of DTX off-duration;
transmitting channel information according to channel information configuration of DTX off-duration.

19. The method according to claim 18, wherein the transmitting part of signals at least includes: transmitting some signal;
the transmitting part of channel information includes at least one of the following: transmitting some data channel information, transmitting some control channel information;
the transmitting part of measurement signals includes at least one of the following: transmitting a periodic measurement signal, transmitting a semi-persistent measurement signal, and transmitting an aperiodic measurement signal;
the receiving part of measurement reporting includes at least one of the following: receiving a periodic measurement report, receiving a semi-persistent measurement report, and receiving an aperiodic measurement report;
the stopping target transmission includes at least one of the following:
stopping all transmission behaviors related to data transmission;
stopping transmitting some or all signals;
stopping transmitting some or all channel information;
stopping receiving some or all request messages;
stopping transmitting some or all measurement signals;
stopping starting some or all timers.

20. The method according to any one of claims 14 to 19, wherein the network node performs transmission behaviors corresponding to different time durations during DTX on-duration and DTX off-duration of the DTX transmission; and/or,
the network node perform transmission in different frequency domain resources during the DTX on-duration and the DTX off-duration of the DTX transmission, respectively; and/or,
the network node performs different transmission behaviors during the DTX on-duration and the DTX off-duration of the DTX transmission.

21. The method according to claim 14, wherein at least one of DTX on-duration and DTX off-duration of the DTX transmission has an association with DRX on-duration or DTX off-duration of the UE;
and/or,
in the case that the network node further includes a core network node, at least one of the DTX on-duration and DTX off-duration of the DTX transmission is associated with transmission of backhaul information, and the backhaul information is information backhauled by the network device to the core network node.

22. The method according to claim 21, wherein at least one of the DTX on-duration and DTX off-duration of the DTX transmission having an association with DRX on-duration or off-duration of the UE, includes at least one of the following:
the DTX parameter information and/or parameters of the UE are used by the UE to determine at least one of DTX on-duration and DTX off-duration;
cycle of the DTX transmission has an association with cycle of DRX transmission of the UE;
DTX on-duration of the DTX transmission has a first association with a signal, channel or message in DRX off-duration of the UE;
DTX on-duration of the DTX transmission has a second association with transmission content of a signal, channel or message in DRX off-duration of the UE;
DTX on-duration of the DTX transmission has a third association with communication behavior of the UE in DRX off-duration of the UE, and the communication behavior includes at least one of periodic behavior and a semi-persistent behavior.

23. The method according to claim 22, wherein the periodic behavior includes at least one of the following: periodic (configured grant) CG transmission, periodic measurement and/or periodic measurement reporting;
and/or,
the semi-persistent behavior includes at least one of the following: semi-persistent scheduling (SPS) physical downlink shared channel (PDSCH) transmission, semi-persistent CG transmission, semi-persistent measurement, and semi-persistent measurement reporting.

24. The method according to claim 21, wherein the DRX on-duration of the UE includes:
DRX on-duration of a target UE corresponding to the network device, wherein the target UE is a specific, some or all UEs corresponding to the network device.

25. The method according to any one of claims 14 to 19, wherein the parameter information is used to determine at least one of DTX on-duration and DTX off-duration of the DTX transmission, and the DTX on-duration and the DTX off-duration are determined based on at least one of the following:
protocol definition, parameter set, UE assistance information, and UE preference information.

26. A network node, comprising: a memory, a transceiver, and a processor;
wherein the memory is used to store a computer program; the transceiver is used to send and receive data under control of the processor; the processor is used to read the computer program in the memory and perform the following operations:
receiving DTX parameter information of a network device sent by the network device;
determining at least one of a DTX on-duration and a DTX off-duration of DTX transmission of the network device, based on the parameter information;
receiving the DTX transmission of the network device based on at least one of the DTX on-duration and the DTX off-duration of the DTX transmission;
wherein the network node at least includes a user equipment (UE), and the network device at least includes a base station.

27. The network node according to claim 26, wherein the parameter information is used to determine at least one of the following:
a starting position of the DTX on-duration of the DTX transmission;
an end position of the DTX on-duration of the DTX transmission;
duration of the DTX on-duration of the DTX transmission;
a starting position of DTX off-duration of the DTX transmission;
an end position of the DTX off-duration of the DTX transmission;
duration of the DTX off-duration of the DTX transmission.

28. The network node according to claim 26, wherein the parameter information includes at least one of the following:
DTX cycle;
an offset value of a starting position of the DTX on-duration;
a starting position of the DTX on-duration;
an end position of the DTX on-duration;
an offset value of the end position of the DTX on-duration;
duration of the DTX on-duration;
cycle of the DTX on-duration;
an offset value of a starting position of the DTX off-duration;
a starting position of the DTX off-duration;
an end position of the DTX off-duration;
an offset value of an end position of the DTX off-duration;
duration of the DTX off-duration;
cycle of the DTX off-duration.

29. The network node according to claim 26, wherein the receiving the DTX transmission of the network device based on at least one of the DTX on-duration and the DTX off-duration of the DTX transmission, includes at least one of the following:
receiving, during the DTX on-duration, at least one of the following items sent by the network device: a message, a signal, or channel information;
performing a target behavior during the DTX off-duration, wherein the target behavior includes at least one of the following:
receiving part of signals;
receiving part of channel information;
receiving part of messages;
performing part of measurements;
performing part of measurement reporting;
stopping target reception;
receiving messages according to message configuration of DTX off-duration;
receiving signals according to signal configuration of DTX off-duration;
receiving channel information according to channel information configuration of DTX off-duration.

30. The network node according to any one of claims 26 to 29, wherein the network node performs receiving behaviors corresponding to different time durations during the DTX on-duration and the DTX off-duration of the DTX transmission; and/or,
the network node perform reception in different frequency domain resources during the DTX on-duration and the DTX off-duration of the DTX transmission, respectively; and/or,
the network node performs different receiving behaviors during the DTX on-duration and the DTX off-duration of the DTX transmission.

31. A network device, comprising: a memory, a transceiver, and a processor;
wherein the memory is used to store a computer program; the transceiver is used to send and receive data under control of the processor; the processor is used to read the computer program in the memory and perform the following operations:
sending DTX parameter information of the network device to a network node;
performing DTX transmission for the network node;
wherein the network node at least includes a user equipment (UE), and the network device at least includes a base station.

32. The network device according to claim 31, wherein the parameter information is used to determine at least one of the following:
a starting position of DTX on-duration of the DTX transmission;
an end position of DTX on-duration of the DTX transmission;
duration of DTX on-duration of the DTX transmission;
a starting position of DTX off-duration of the DTX transmission;
an end position of DTX off-duration of the DTX transmission;
duration of DTX off-duration of the DTX transmission.

33. The method according to claim 31, wherein the parameter information includes at least one of the following:
DTX cycle;
an offset value of a starting position of DTX on-duration;
a starting position of the DTX on-duration;
an end position of the DTX on-duration;
an offset value of the end position of the DTX on-duration;
duration of the DTX on-duration;
cycle of the DTX on-duration;
an offset value of a starting position of DTX off-duration;
a starting position of the DTX off-duration;
an end position of the DTX off-duration;
an offset value of an end position of the DTX off-duration;
duration of the DTX off-duration;
cycle of the DTX off-duration.

34. The network device according to claim 31, wherein the performing DTX transmission for the network node, includes at least one of the following:
transmitting, during DTX on-duration, at least one of the following to the network node: a message, a signal, or channel information;
performing a target behavior during DTX off-duration, wherein the target behavior includes at least one of the following:
transmitting part of signals;
transmitting part of channel information;
transmitting part of messages;
transmitting part of measurement signals;
receiving part of measurement reporting;
stopping target transmission;
transmitting messages according to message configuration of DTX off-duration;
transmitting signals according to signal configuration of DTX off-duration;
transmitting channel information according to channel information configuration of DTX off-duration.

35. The network device according to any one of claims 31 to 34, wherein the network node performs transmission behaviors corresponding to different time durations during DTX on-duration and DTX off-duration of the DTX transmission; and/or,
the network node perform transmission in different frequency domain resources during the DTX on-duration and the DTX off-duration of the DTX transmission, respectively; and/or,
the network node performs different transmission behaviors during the DTX on-duration and the DTX off-duration of the DTX transmission.

36. A network node, comprising:
a first receiving module configured to receive DTX parameter information of a network device sent by the network device;
a determination module configured to determine at least one of a DTX on-duration and a DTX off-duration of DTX transmission of the network device, based on the parameter information;
a second receiving module configured to receive the DTX transmission of the network device based on at least one of the DTX on-duration and the DTX off-duration of the DTX transmission;
wherein the network node at least includes a user equipment (UE), and the network device at least includes a base station.

37. A network device, comprising:
a sending module configured to send DTX parameter information of the network device to a network node;
an execution module configured to perform DTX transmission for the network node;
wherein the network node at least includes a user equipment (UE), and the network device at least includes a base station.

38. A processor-readable storage medium, comprising a computer program stored thereon; wherein the computer program is used to cause a processor to perform the method according to any one of claims 1 to 13, or the computer program is used to cause the processor to perform the method according to any one of claims 14 to 25.
